(19) Europäisches Patentamt
European Patent Office
Office européen des brevets

(11) **EP 4 723 775 A1**

(12) **EUROPEAN PATENT APPLICATION**
published in accordance with Art. 153(4) EPC

(43) Date of publication:
**08.04.2026 Bulletin 2026/15**

(21) Application number: **24838666.6**

(22) Date of filing: **03.07.2024**

(51) International Patent Classification (IPC):
***H04W 72/0446** (2023.01)*

(52) Cooperative Patent Classification (CPC):
**H04W 72/0446; H04W 72/0453; H04W 72/53**

(86) International application number:
**PCT/CN2024/103409**

(87) International publication number:
**WO 2025/011411 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.07.2023 CN 202310837813**

(71) Applicant: **Huawei Technologies Co., Ltd.**
**Shenzhen, Guangdong 518129 (CN)**

(72) Inventors:
- **GUO, Zhiheng**
  **Shenzhen, Guangdong 518129 (CN)**
- **SONG, Xinghua**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD, APPARATUS AND SYSTEM**

(57) This application provides a communication method, apparatus, and system, and relates to the field of wireless communication, and in particular, to a scenario with a high frequency and a large bandwidth in a wireless communication system, to avoid a spectrum resource waste caused due to transmission waiting, and improve communication efficiency. The method may include: sending or receiving first transmission on at least one first symbol. A first time unit includes a plurality of first symbols, a quantity of the first symbols included in the first time unit is N, N is equal to a product of at least three prime numbers, duration of the first time unit is 1 divided by $2^u$ milliseconds, N is a positive integer, u is a positive integer, and u is less than or equal to 8.

Terminal device
Network device
S310: The terminal device receives configuration or scheduling information from the network device
S320: The terminal device sends or receives first transmission on at least one first symbol

FIG. 3



Processed by Luminess, 75001 PARIS (FR)

## Description

This application claims priority to Chinese Patent Application No. 202310837813.5, filed with the China National Intellectual Property Administration on July 7, 2023 and entitled "COMMUNICATION METHOD, APPARATUS, AND SYSTEM", which is incorporated herein by reference in its entirety.

## TECHNICAL FIELD

Embodiments of this application relate to the communication field, and more specifically, to a communication method, apparatus, and system.

## BACKGROUND

As cellular mobile communication is deployed at a high frequency or even at sub-100 GHz, a spectrum bandwidth is greatly improved, and the bandwidth may reach over 1 GHz or even reach 10 GHz. Many aspects need to be considered for designing an air interface at such a high frequency and large bandwidth.

A design of a 5th generation (5th Generation, 5G) mobile communication system may be reused, and a larger subcarrier spacing is used to resist higher phase noise. In addition, using a larger subcarrier spacing enables coverage over a larger bandwidth using a limited quantity of subcarriers. For example, currently, 5G limits a quantity of subcarriers of a single carrier to 3300, and a bandwidth of about 6 GHz can be covered by using a subcarrier spacing of 1.92 MHz. How to perform symbol design in time domain to perform transmission better at a larger bandwidth and a larger subcarrier spacing is a problem that needs to be resolved.

## SUMMARY

This application provides a communication method, apparatus, and system, to avoid, when a terminal device performs transmission in a large-bandwidth scenario, a spectrum resource waste caused due to transmission waiting, and improve communication efficiency.

According to a first aspect, a communication method is provided. The method may be performed by a terminal device, or may be performed by a component (for example, a chip or a circuit) of the terminal device, or may be performed by a network device, or may be performed by a component (for example, a chip or a circuit) of the network device. This is not limited in this application. For ease of description, the following uses an example in which the method is performed by the terminal device for description.

The method may include: sending or receiving first transmission on at least one first symbol. The at least one first symbol is located in a first time unit, the first time unit includes a plurality of first symbols, a quantity of the first symbols included in the first time unit is N, N is equal to a product of at least three prime numbers, duration of the first time unit is 1 divided by $2^u$ milliseconds, N is a positive integer, u is a positive integer, and u is less than or equal to 8.

In the foregoing solution, when the terminal device performs transmission, a quantity of prime numbers of a quantity of symbols in one time unit is as large as possible, to make scheduling easier. To be specific, if the terminal device is scheduled in the time unit based on a length, and if there are a large quantity of prime numbers of the quantity of symbols in the time unit, there is a high probability that the length for scheduling is exactly divisible by the quantity of symbols in the time unit. In this case, a scheduling result is that there are an integer quantity of scheduling opportunities. In this way, it can be ensured that spectrum resources can be better used in a large-bandwidth scenario, to avoid a spectrum resource waste caused due to transmission being limited by a time unit boundary, and improve communication efficiency.

In a possible design, cyclic prefix lengths of the plurality of first symbols each are a product of a first length and a second time unit or a product of a second length and the second time unit, where each of the first length and the second length is an integer multiple of one of 16, 32, 64, 128, or 256, the first length is not equal to the second length, the second time unit is m/(first subcarrier spacing*first value), the first subcarrier spacing is one of 480 kHz, 960 kHz, 1920 kHz, 3840 kHz, or 7680 kHz, the first value is one of 2048, 4096, 8192, 16384, or 32768, and m is 1 or a positive integer.

In a possible design, a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

Symbols with two different types of cyclic prefix lengths are configured in the first time unit, so that transmission can adapt to more scenarios. Different cyclic prefix lengths may be used for performing functions of data transmission and sensing at different distances.

In a possible design, a quantity of second symbols in the first time unit is N1, the second symbol is a symbol that is of the plurality of first symbols and whose cyclic prefix length is the product of the first length and the second time unit, and N1 is an integer greater than or equal to 0.

In a possible design, a quantity of third symbols in the first time unit is N2, the third symbol is a symbol that is of the plurality of first symbols and whose cyclic prefix length is the product of the second length and the second time unit, and N2 is an integer greater than or equal to 0.

In this case, values of cyclic prefix lengths of symbols in the first time unit are the same, to facilitate unified scheduling in a fixed scenario.

In a possible design, first N1 consecutive symbols in the first time unit are the second symbols, and last N2 consecutive symbols in the first time unit are the third symbols.

In this way, symbols with a same cyclic prefix length may be placed together, to be applicable to centralized transmission in different scenarios.

In a possible design, first N3 consecutive symbols in the first time unit are the second symbols, last N4 consecutive symbols in the first time unit are the second symbols, and the N2 third symbols are consecutive in the first time unit, where N3+N4=N1.

In this way, symbols with a same cyclic prefix length that is long or short may be placed together, to be applicable to centralized transmission in some scenarios.

In a possible design, the first time unit includes consecutive third time units, a 1st symbol in the third time unit is the second symbol, and remaining symbols in the third time unit are floor(N1/N2) third symbols, where floor represents rounding down, and N1 is greater than N2.

In a possible design, the first time unit includes consecutive third time units, a 1st symbol in the third time unit is the third symbol, and remaining symbols in the third time unit are floor(N2/N1) second symbols, where floor represents rounding down, and N2 is greater than N1.

In this way, symbols with different cyclic prefix lengths may be spaced apart, to be applicable to short transmission time in different scenarios.

In a possible design, the product of the first length and the second time unit is greater than 50 nanoseconds, and the product of the second length and the second time unit is greater than 50 nanoseconds.

In this way, the cyclic prefix length can meet a requirement of a high-frequency multipath delay, to improve system performance.

In a possible design, the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N2 is one of 168, 176, 136, 160, 102, 51, 120, 92, 144, 116, 156, 114, 138, 132, 192, 140, 180, 200, 128, or 108.

In a possible design, the second length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N2 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the first length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N1 is one of 168, 176, 136, 160, 102, 51, 120, 92, 144, 116, 156, 114, 138, 132, 192, 140, 180, 200, 128, or 108.

In a possible design, N1 is 80, N2 is 120, the first length is 800, and the second length is 832. Alternatively, N1 is 80, N2 is 120, the first length is 512, and the second length is 1024.

According to a second aspect, a communication method is provided. The method may be performed by a terminal device, or may be performed by a component (for example, a chip or a circuit) of the terminal device, or may be performed by a network device, or may be performed by a component (for example, a chip or a circuit) of the network device. This is not limited in this application. For ease of description, the following uses an example in which the method is performed by the network device for description.

The method may include: receiving or sending first transmission on at least one first symbol. The at least one first symbol is located in a first time unit, the first time unit includes a plurality of first symbols, a quantity of the first symbols included in the first time unit is N, N is equal to a product of at least three prime numbers, and N is a positive integer.

In the foregoing solution, when the terminal device performs transmission, a quantity of prime factors of a quantity of symbols in one time unit is as large as possible, to make scheduling easier. To be specific, if the terminal device is scheduled based on a length of a factor, a scheduling result is that there are an integer quantity of scheduling opportunities. In this way, it can be ensured that spectrum resources can be better used in a large-bandwidth scenario, to avoid a spectrum resource waste caused due to transmission being limited by a time unit boundary, and improve communication efficiency.

In a possible design, duration of the first time unit is 1 divided by $2^u$ milliseconds, u is a positive integer, and u is less than or equal to 8.

In the foregoing manner, excessively short duration of the first time unit is avoided.

In a possible design, cyclic prefix lengths of the plurality of first symbols each are a product of a first length and a second time unit or a product of a second length and the second time unit, where each of the first length and the second length is an integer multiple of one of 16, 32, 64, 128, or 256, the first length is not equal to the second length, the second time unit is m/(first subcarrier spacing*first value), the first subcarrier spacing is one of 480 kHz, 960 kHz, 1920 kHz, 3840 kHz, or 7680 kHz, the first value is one of 2048, 4096, 8192, 16384, or 32768, and m is 1 or a positive integer.

In a possible design, a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

Symbols with two different types of cyclic prefix lengths are configured in the first time unit, so that transmission can adapt to more scenarios. Different cyclic prefix lengths may be used for performing functions of data transmission and sensing at different distances.

In a possible design, a quantity of second symbols in the first time unit is N1, the second symbol is a symbol that is of the plurality of first symbols and whose cyclic prefix length is the product of the first length and the second time unit, and N1 is an integer greater than or equal to 0.

In a possible design, a quantity of third symbols in the first time unit is N2, the third symbol is a symbol that is of the plurality of first symbols and whose cyclic prefix length is the product of the second length and the second time unit, and N2 is an integer greater than or equal to 0.

In this case, values of cyclic prefix lengths of symbols in the first time unit are the same, to facilitate unified scheduling in a fixed scenario.

In a possible design, first N1 consecutive symbols in the first time unit are the second symbols, and last N2 consecutive symbols in the first time unit are the third symbols.

In this way, symbols with a same cyclic prefix length may be placed together, to be applicable to centralized transmission in different scenarios.

In a possible design, first N3 consecutive symbols in the first time unit are the second symbols, last N4 consecutive symbols in the first time unit are the second symbols, and the N2 third symbols are consecutive in the first time unit, where N3+N4=N1.

In this way, symbols with a same cyclic prefix length that is long or short may be placed together, to be applicable to centralized transmission in some scenarios.

In a possible design, the first time unit includes consecutive third time units, a 1st symbol in the third time unit is the second symbol, and remaining symbols in the third time unit are floor(N1/N2) third symbols, where floor represents rounding down, and N1 is greater than N2.

In a possible design, the first time unit includes consecutive third time units, a 1st symbol in the third time unit is the third symbol, and remaining symbols in the third time unit are floor(N2/N1) second symbols, where floor represents rounding down, and N2 is greater than N1.

In this way, symbols with different cyclic prefix lengths may be spaced apart, to be applicable to short transmission time in different scenarios.

In a possible design, the product of the first length and the second time unit is greater than 50 nanoseconds, and the product of the second length and the second time unit is greater than 50 nanoseconds.

In this way, the cyclic prefix length can meet a requirement of a high-frequency multipath delay, to improve system performance.

In a possible design, the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N2 is one of 168, 176, 136, 160, 102, 51, 120, 92, 144, 116, 156, 114, 138, 132, 192, 140, 180, 200, 128, or 108.

In a possible design, the second length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N2 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the first length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N1 is one of 168, 176, 136, 160, 102, 51, 120, 92, 144, 116, 156, 114, 138, 132, 192, 140, 180, 200, 128, or 108.

In a possible design, N1 is 80, N2 is 120, the first length is 800, and the second length is 832. Alternatively, N1 is 80, N2 is 120, the first length is 512, and the second length is 1024.

According to a third aspect, a communication method is provided. The method may be performed by a terminal device, or may be performed by a component (for example, a chip or a circuit) of the terminal device, or may be performed by a network device, or may be performed by a component (for example, a chip or a circuit) of the network device. This is not limited in this application. For ease of description, the following uses an example in which the method is performed by the terminal device for description.

The method may include: sending or receiving first transmission on at least one first symbol. The at least one first symbol is located in a first time unit, the first time unit includes a plurality of first symbols, a quantity of the first symbols included in the first time unit is N, N is one of 184, 189, 192, 196, 198, 200, 204, 208, 210, 216, 220, 224, 225, or 228, duration of the first time unit is 1 divided by $2^u$ milliseconds, u is a positive integer, and u is less than or equal to 8.

In the foregoing solution, N is set to a specific value, so that when the terminal device performs transmission, a quantity of prime factors of a quantity of symbols in one time unit is as large as possible, to make scheduling easier. To be specific, if the terminal device is scheduled based on a length of a factor, a scheduling result is that there are an integer quantity of scheduling opportunities. In this way, it can be ensured that spectrum resources can be better used in a large-bandwidth scenario, to avoid a spectrum resource waste caused due to transmission being limited by a time unit boundary, and improve communication efficiency.

In a possible design, cyclic prefix lengths of the plurality of first symbols each are a product of a first length and a second time unit or a product of a second length and the second time unit, where each of the first length and the second length is an integer multiple of one of 16, 32, 64, 128, or 256, the first length is not equal to the second length, the second time unit is m/(first subcarrier spacing*first value), the first subcarrier spacing is one of 480 kHz, 960 kHz, 1920 kHz, 3840 kHz, or 7680 kHz, the first value is one of 2048, 4096, 8192, 16384, or 32768, and m is 1 or a positive integer.

In a possible design, a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

Symbols with two different types of cyclic prefix lengths are configured in the first time unit, so that transmission can adapt to more scenarios. Different cyclic prefix lengths may be used for performing functions of data transmission and sensing at different distances.

In a possible design, a quantity of second symbols in the first time unit is N1, the second symbol is a symbol that is of the plurality of first symbols and whose cyclic prefix length is the product of the first length and the second time unit, and N1 is an integer greater than or equal to 0.

In a possible design, a quantity of third symbols in the first time unit is N2, the third symbol is a symbol that is of the plurality of first symbols and whose cyclic prefix length is the product of the second length and the second time unit, and N2 is an integer greater than or equal to 0.

In this case, values of cyclic prefix lengths of symbols in the first time unit are the same, to facilitate unified scheduling in a fixed scenario.

In a possible design, first N1 consecutive symbols in the first time unit are the second symbols, and last N2 consecutive symbols in the first time unit are the third symbols.

In this way, symbols with a same cyclic prefix length may be placed together, to be applicable to centralized transmission in different scenarios.

In a possible design, first N3 consecutive symbols in the first time unit are the second symbols, last N4 consecutive symbols in the first time unit are the second symbols, and the N2 third symbols are consecutive in the first time unit, where N3+N4=N1.

In this way, symbols with a same cyclic prefix length that is long or short may be placed together, to be applicable to centralized transmission in some scenarios.

In a possible design, the first time unit includes consecutive third time units, a 1st symbol in the third time unit is the second symbol, and remaining symbols in the third time unit are floor(N1/N2) third symbols, where floor represents rounding down, and N1 is greater than N2.

In a possible design, the first time unit includes consecutive third time units, a 1st symbol in the third time unit is the third symbol, and remaining symbols in the third time unit are floor(N2/N1) second symbols, where floor represents rounding down, and N2 is greater than N1.

In this way, symbols with different cyclic prefix lengths may be spaced apart, to be applicable to short transmission time in different scenarios.

In a possible design, the product of the first length and the second time unit is greater than 50 nanoseconds, and the product of the second length and the second time unit is greater than 50 nanoseconds.

In this way, the cyclic prefix length can meet a requirement of a high-frequency multipath delay, to improve system performance.

In a possible design, the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N2 is one of 168, 176, 136, 160, 102, 51, 120, 92, 144, 116, 156, 114, 138, 132, 192, 140, 180, 200, 128, or 108.

In a possible design, the second length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N2 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the first length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N1 is one of 168, 176, 136, 160, 102, 51, 120, 92, 144, 116, 156, 114, 138, 132, 192, 140, 180, 200, 128, or 108.

In a possible design, N1 is 80, N2 is 120, the first length is 800, and the second length is 832. Alternatively, N1 is 80, N2 is 120, the first length is 512, and the second length is 1024.

According to a fourth aspect, a communication method is provided. The method may be performed by a terminal device, or may be performed by a component (for example, a chip or a circuit) of the terminal device, or may be performed by a network device, or may be performed by a component (for example, a chip or a circuit) of the network device. This is not limited in this application. For ease of description, the following uses an example in which the method is performed by the network device for description.

The method may include: receiving or sending first transmission on at least one first symbol. The at least one first symbol is located in a first time unit, the first time unit includes a plurality of first symbols, a quantity of the first symbols included in the first time unit is N, and N is one of 184, 189, 192, 196, 198, 200, 204, 208, 210, 216, 220, 224, 225, or 228.

In the foregoing solution, N is set to a specific value, so that when the terminal device performs transmission, a quantity of prime factors of a quantity of symbols in one time unit is as large as possible, to make scheduling easier. To be specific, if the terminal device is scheduled based on a length of a factor, a scheduling result is that there are an integer quantity of scheduling opportunities. In this way, it can be ensured that spectrum resources can be better used in a large-bandwidth scenario, to avoid a spectrum resource waste caused due to transmission being limited by a time unit boundary, and improve communication efficiency.

In a possible design, duration of the first time unit is 1 divided by $2^u$ milliseconds, u is a positive integer, and u is less than or equal to 8.

In the foregoing manner, excessively short duration of the first time unit is avoided.

In a possible design, cyclic prefix lengths of the plurality of first symbols each are a product of a first length and a second time unit or a product of a second length and the second time unit, where each of the first length and the second length is an integer multiple of one of 16, 32, 64, 128, or 256, the first length is not equal to the second length, the second time unit is m/(first subcarrier spacing*first value), the first subcarrier spacing is one of 480 kHz, 960 kHz, 1920 kHz, 3840 kHz, or 7680 kHz, the first value is one of 2048, 4096, 8192, 16384, or 32768, and m is 1 or a positive integer.

In a possible design, a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

Symbols with two different types of cyclic prefix lengths are configured in the first time unit, so that transmission can adapt to more scenarios. Different cyclic prefix lengths may be used for performing functions of data transmission and sensing at different distances.

In a possible design, a quantity of second symbols in the first time unit is N1, the second symbol is a symbol that is of the plurality of first symbols and whose cyclic prefix length is the product of the first length and the second time unit, and N1 is an integer greater than or equal to 0.

In a possible design, a quantity of third symbols in the first time unit is N2, the third symbol is a symbol that is of the plurality of first symbols and whose cyclic prefix length is the product of the second length and the second time unit, and N2 is an integer greater than or equal to 0.

In this case, values of cyclic prefix lengths of symbols in the first time unit are the same, to facilitate unified scheduling in a fixed scenario.

In a possible design, first N1 consecutive symbols in the first time unit are the second symbols, and last N2 consecutive symbols in the first time unit are the third symbols.

In this way, symbols with a same cyclic prefix length may be placed together, to be applicable to centralized transmission in different scenarios.

In a possible design, first N3 consecutive symbols in the first time unit are the second symbols, last N4 consecutive symbols in the first time unit are the second symbols, and the N2 third symbols are consecutive in the first time unit, where N3+N4=N1.

In this way, symbols with a same cyclic prefix length that is long or short may be placed together, to be applicable to centralized transmission in some scenarios.

In a possible design, the first time unit includes consecutive third time units, a 1st symbol in the third time unit is the second symbol, and remaining symbols in the third time unit are floor(N1/N2) third symbols, where floor represents rounding down, and N1 is greater than N2.

In a possible design, the first time unit includes consecutive third time units, a 1st symbol in the third time unit is the third symbol, and remaining symbols in the third time unit are floor(N2/N1) second symbols, where floor represents rounding down, and N2 is greater than N1.

In this way, symbols with different cyclic prefix lengths may be spaced apart, to be applicable to short transmission time in different scenarios.

In a possible design, the product of the first length and the second time unit is greater than 50 nanoseconds, and the product of the second length and the second time unit is greater than 50 nanoseconds.

In this way, the cyclic prefix length can meet a requirement of a high-frequency multipath delay, to improve system performance.

In a possible design, the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N2 is one of 168, 176, 136, 160, 102, 51, 120, 92, 144, 116, 156, 114, 138, 132, 192, 140, 180, 200, 128, or 108.

In a possible design, the second length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible design, N2 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201.

In a possible design, the first length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

In a possible design, N1 is one of 168, 176, 136, 160, 102, 51, 120, 92, 144, 116, 156, 114, 138, 132, 192, 140, 180, 200, 128, or 108.

In a possible design, N1 is 80, N2 is 120, the first length is 800, and the second length is 832. Alternatively, N1 is 80, N2 is 120, the first length is 512, and the second length is 1024.

Correspondingly, this application further provides a communication device. The device may implement the communication method according to any one of the foregoing aspects. For example, the device may be a terminal device or a network device, or may be another device that can implement the foregoing communication method. The device may implement the foregoing method by using software, hardware, or hardware executing corresponding software.

In a possible design, the device may include a processor and a memory. The processor is configured to support the device in performing a corresponding function in the method according to any one of the foregoing aspects. The memory is configured to be coupled to the processor, and stores program instructions and data that are necessary for the device. In addition, the device may further include a communication interface, configured to support communication between the device and another device. The communication interface may be a transceiver or a transceiver circuit.

According to another aspect, an embodiment of this application provides a communication system. The system includes the communication device according to the foregoing aspect.

Another aspect of this application provides a computer-readable storage medium. The computer-readable storage medium stores instructions. When the instructions are run on a computer, the computer is caused to perform the methods according to the foregoing aspects.

Another aspect of this application provides a computer program product including instructions. When the computer program product runs on a computer, the computer is caused to perform the methods according to the foregoing aspects.

This application further provides a chip system. The chip system includes a processor, and may further include a memory, configured to implement the method according to any one of the foregoing aspects.

Any one of the device, the computer storage medium, the computer program product, the chip system, or the communication system provided above is configured to perform the corresponding method provided above. Therefore, for beneficial effects that can be achieved by any one of the device, the computer storage medium, the computer program product, the chip system, or the communication system, refer to beneficial effects of corresponding solutions in the corresponding method provided above. Details are not described herein again.

## BRIEF DESCRIPTION OF DRAWINGS

FIG. 1 is a diagram of a wireless communication system according to an embodiment of this application;
FIG. 2 is a diagram of an OFDM symbol according to an embodiment of this application;
FIG. 3 is an interaction diagram of a communication method according to an embodiment of this application;
FIG. 4 is a diagram of a plurality of first time units according to an embodiment of this application;
FIG. 5 is a diagram of locations of symbols in a first time unit according to an embodiment of this application;
FIG. 6 is a diagram of a communication apparatus according to an embodiment of this application;
FIG. 7 is a diagram of another communication apparatus according to an embodiment of this application;
FIG. 8 is a diagram of still another communication apparatus according to an embodiment of this application; and
FIG. 9 is a diagram of a communication system according to an embodiment of this application.

## DESCRIPTION OF EMBODIMENTS

The following describes technical solutions of this application with reference to accompanying drawings.

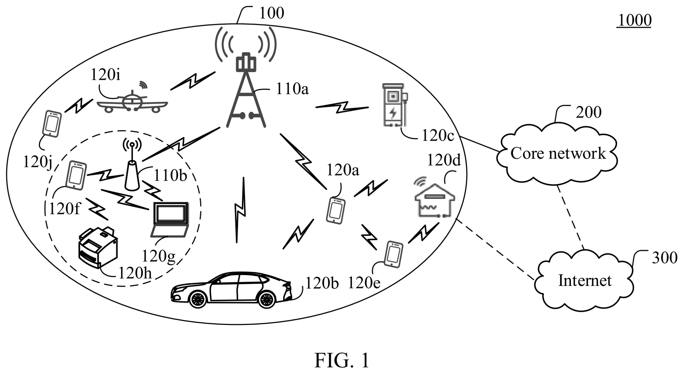

FIG. 1 is a diagram of a possible and non-limiting system. As shown in FIG. 1, a communication system 1000 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G mobile communication system, a 5G mobile communication system, or a future-oriented evolution system (for example, a future mobile communication system). The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates the foregoing two or more the systems.

The RAN node 110 may sometimes also referred to as an access network device, a RAN entity, an access node, or the like, is a part of a communication system, and is configured to help a terminal implement wireless access. A plurality of RAN nodes 110 in the communication system 1000 may be nodes of a same type, or may be nodes of different types. In some scenarios, a role of the RAN node 110 and a role of the terminal 120 are relative to each other. For example, a network element 120i in FIG. 1 may be a helicopter or an uncrewed aerial vehicle, and may be configured as a mobile base station. For those terminals 120j that access the RAN 100 through the network element 120i, the network element 120i is a base station. However, for a base station 110a, the network element 120i is a terminal. The RAN node 110 and the terminal 120 are sometimes referred to as communication apparatuses. For example, network elements 110a and 110b in FIG. 1 may be understood as communication apparatuses functioning as the base station, and network elements 120a to 120j may be understood as communication apparatuses functioning as the terminal.

In a possible scenario, the RAN node may be a network device, a base station (base station), an evolved NodeB (evolved NodeB, eNodeB), an access point (access point, AP), a transmission reception point (transmission reception point, TRP), a next generation NodeB (next generation NodeB, gNB), a base station in a future mobile communication system, an access node in a Wi-Fi system, or the like. The RAN node may be a macro base station (for example, 110a in FIG. 1), a micro base station, an indoor station (for example, 110b in FIG. 1), a relay node, a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes work together to assist the terminal in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or a CU-CP and a CU-UP), the DU, or the RU may also have different names, and a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robotic arm, a smart home device, or the like. A device form of the terminal is not limited in embodiments of this application.

The following first provides definitions of technical terms that may appear in embodiments of this application. The terms used in implementations of this application are merely used to explain specific embodiments of this application, and are not intended to limit this application.

1. Orthogonal frequency division multiplexing (orthogonal frequency division multiplexing, OFDM) symbol

A unit of scheduling time in NR data domain is a slot, and there are 14 OFDM symbols in one slot. Although a quantity of the symbols in the slot is fixed, a symbol length is related to a subcarrier spacing (subcarrier spacing, SCS), and different SCSs correspond to different symbol lengths. NR supports five types of SCSs: 15 kHz, 30 kHz, 60 kHz, 120 kHz, and 240 kHz.

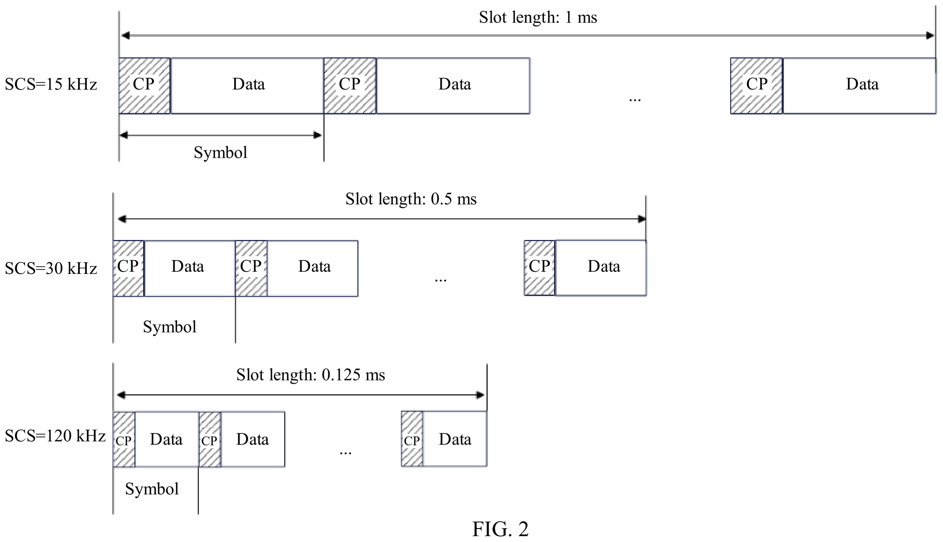

In NR, the OFDM symbol includes two parts: a data symbol and a cyclic prefix (cyclic prefix, CP). As shown in FIG. 2, each OFDM symbol includes a CP and a data symbol, 14 symbols form one slot, and different SCSs correspond to different symbol lengths and different slot lengths. A slot length corresponding to a 15-kHz SCS is 1 ms, a slot length corresponding to a 30-kHz SCS is 0.5 ms, and a slot length corresponding to a 120-kHz SCS is 0.125 ms.

A length of the data symbol in the OFDM symbol is determined according to the following formula:

$$N_d^v = 2048k * 2^{-v}$$

A length of the CP in the OFDM symbol is determined according to the following formula:

$$N_{CP,l}^{v} = \begin{cases} 512k * 2^{-v} & \text{ExtendedCP} \\ 144k * 2^{-v} + 16k & \text{NormalCP}, l = 0 \text{or} l = 7 * 2^{v} \\ 144k * 2^{-v} & \text{NormalCP}, l \neq 0 \text{and} l \neq 7 * 2^{v} \end{cases}$$

$l$ represents a symbol number, $v = log_2 (SCS/15\ kHz)$, and k is 64. $N_d^v$ and $N_{CP,l}^{v}$ that are obtained through calculation according to the foregoing two formulas further need to be multiplied by $T_c$, to obtain respective duration, where $T_c = 1/(480 * 10^3 * 4096)$ seconds.

It can be learned that there are two types of CP lengths for the normal CP. Assuming that an SCS is 1.92 MHz, v=7. It can be learned from the foregoing formula that, a CP length is 1096 for both a 0th OFDM symbol and an 896th OFDM symbol, and a CP length is 72 for other OFDM symbols. In this way, an existing NR-based design causes a large difference between the two types of CP lengths. A short CP cannot meet a requirement of a high-frequency channel propagation delay, causing inter-symbol interference. In addition, NR is designed based on a slot, and there are 14 OFDM symbols in each slot. However, lengths of slots including the 0th OFDM symbol and the 896th OFDM symbol are different from lengths of other slots, that is, lengths may vary with slots. This causes difficulty to system implementation. In addition, a short CP length obtained through the foregoing calculation is $72*T_c$=36.621 ns, which has a specific difference with a high-frequency multipath delay spread of about 50 ns. Consequently, OFDM system performance deteriorates. In addition, a low delay is important for future communication. Because there is a slot boundary, transmission may be limited by the slot boundary. As a result, key information is transmitted after a slot starts. How to remove a limitation on resource scheduling at a granularity of a slot and shorten a scheduling delay is a problem that needs to be resolved.

To resolve the foregoing problem, an embodiment of this application provides a communication method in which a quantity of OFDM symbols in a time unit is designed, so that a quantity of prime numbers of a quantity of symbols in one periodicity is as large as possible, thereby making scheduling easier and shortening a scheduling delay.

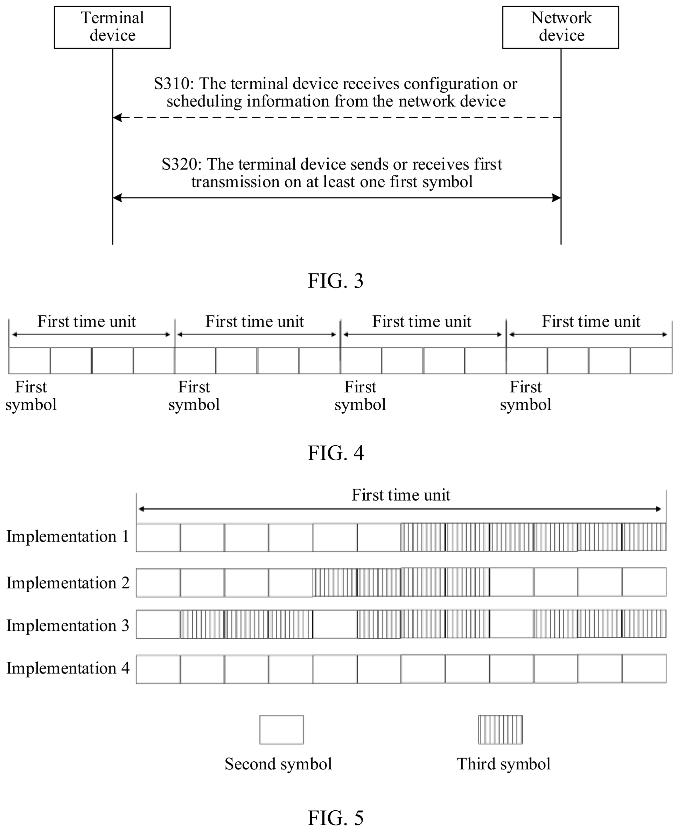

FIG. 3 is an example of a diagram of a communication method according to an embodiment of this application. The method may be performed by a terminal device and a network device, or may be performed by a chip in the terminal device and a chip in the network device. It should be understood that FIG. 3 shows steps or operations of the communication method, but these steps or operations are merely examples. In this embodiment of this application, another operation or variations of the operations in FIG. 3 may further be performed, or the steps may be properly exchanged with each other.

S310: The terminal device receives configuration or scheduling information from the network device.

Correspondingly, the network device sends the configuration or scheduling information to the terminal device. The configuration or scheduling information indicates the terminal device to send or receive first transmission on at least one first symbol.

Step S310 is an optional step.

S320: The terminal device sends or receives the first transmission on the at least one first symbol.

Correspondingly, the network device receives or sends the first transmission on the at least one first symbol. Specifically, the terminal device sends the first transmission to the network device on the at least one first symbol, or the terminal device receives the first transmission from the network device on the at least one first symbol.

The at least one first symbol is located in a first time unit, and the first time unit includes a plurality of first symbols.

A quantity of the first symbols included in the first time unit is N, or the first time unit includes N consecutive first symbols. N is a positive integer.

It should be understood that the first time unit includes a plurality of first symbols. Transmission of the first transmission may be performed on some or all of the plurality of first symbols.

In a possible implementation, duration of the first time unit is 1 divided by $2^u$ milliseconds, where u is a positive integer.

In a possible implementation, u is less than or equal to 8. In this way, the duration of the first time unit is one of 7.8125 μs, 15.625 μs, 31.25 μs, 62.5 μs, 125 μs, 250 μs, 500 μs, or 1000 μs, to avoid excessively short duration of the first time unit. In another possible implementation, u is 0.

In a possible implementation, a plurality of first time units are continuously distributed in time domain, or the plurality of first time units periodically appear in time domain. For example, refer to FIG. 4. In a possible implementation, all of the plurality of first time units include a same quantity and same structure of first symbols. For the quantity of first symbols in each of the plurality of first time units and a corresponding arrangement manner, refer to the following descriptions about the first time unit. In a possible implementation, first time includes one or more scheduling time units. In a possible implementation, the first time unit is a frame, a subframe, or a slot.

In a possible implementation, the first symbol is an OFDM symbol.

There may be a plurality of possible implementations for determining N.

Implementation 1: N is equal to a product of at least three prime numbers. It should be understood that the at least three prime numbers herein may be equal or not equal. For example, N may be equal to 2*2*2*23=184. For another example, N may be equal to 2*3*5*7=210.

When the terminal device performs transmission, if a quantity of prime numbers of a quantity of symbols in the first time unit is as large as possible, scheduling may be easier. For example, if the terminal device is scheduled in the first time unit based on a time length, and if there are a large quantity of prime numbers of the quantity of symbols in the first time unit, there is a high probability that the time length for scheduling is exactly divisible by the quantity of symbols in the time unit. In this case, in the first time unit, a scheduling result is that there are an integer quantity of scheduling opportunities. For example, if the time length for scheduling the terminal device is three symbols, and if N is 30, prime numbers forming N include 3. In this way, there may be 10 scheduling opportunities in the first time unit, and no symbol is wasted. In this way, it can be ensured that spectrum resources can be better used in a large-bandwidth scenario, to avoid a spectrum resource waste caused due to transmission being limited by a time unit boundary, and improve communication efficiency. However, if N is 14, there is no integer quantity of scheduling opportunities, and two symbols are wasted.

Implementation 2: If N is greater than or equal to 80 and is less than or equal to 120, N is equal to a product of three prime numbers. Alternatively, if N is greater than or equal to 160 and is less than or equal to 240, N is equal to a product of four prime numbers. Alternatively, if N is greater than or equal to 40 and is less than or equal to 60, N is equal to a product of two prime numbers. For example, N is equal to 3*3*11=99. For another example, N is equal to 2*2*5*11=220. For another example, N is equal to 5*11=55. In this way, if N can be decomposed into as many factors as possible, the first time unit may be divided into smaller time units, to make scheduling more flexible and easier.

Implementation 3: N is one of 12, 13, or 14. In this way, if the first time unit can include 15 symbols without considering a CP, the foregoing value of N may be selected as a quantity of symbols when the CP is considered. In this way, a requirement of the CP is met, and an excessively long CP of each symbol is avoided. In addition, the first time unit includes a small quantity of symbols. In this way, the first time unit has a short periodicity, and fast scheduling can be implemented.

Implementation 4: N is one of 23, 24, 25, 26, 27, or 28. In this way, if the first time unit can include 30 symbols without considering a CP, the foregoing value of N may be selected as a quantity of symbols when the CP is considered. In this way, a requirement of the CP is met, and an excessively long CP of each symbol is avoided.

Implementation 5: N is one of 46, 47, 48, 49, 50, 51, 52, 54, 55, 56, or 57. In this way, if the first time unit can include 60 symbols without considering a CP, the foregoing value of N may be selected as a quantity of symbols when the CP is considered. In this way, a requirement of the CP is met, and an excessively long CP of each symbol is avoided.

Implementation 6: N is one of 92, 94, 96, 98, 99, 100, 102, 104, 105, 108, 110, 112, or 114. In this way, if the first time unit can include 120 symbols without considering a CP, the foregoing value of N may be selected as a quantity of symbols when the CP is considered. In this way, a requirement of the CP is met, and an excessively long CP of each symbol is avoided.

Implementation 7: N is one of 184, 189, 192, 196, 198, 200, 204, 208, 210, 216, 220, 224, 225, or 228. In this way, if the first time unit can include 240 symbols without considering a CP, the foregoing value of N may be selected as a quantity of symbols when the CP is considered. In this way, a requirement of the CP is met, and an excessively long CP of each symbol is avoided. In addition, when the first time unit includes a large quantity of symbols, if N can be decomposed into as many factors as possible, the first time unit may be divided into smaller time units, to make scheduling more flexible and easier.

In a possible implementation, CP lengths of the plurality of first symbols are classified into two types. One type of CP length is a product of a first length and a second time unit, and the other type of CP length is a product of a second length and the second time unit. Each of the first length and the second length is an integer multiple of one of 16, 32, 64, 128, or 256. The first length is not equal to the second length. In this way, the CP length can be decomposed into as many factors of 2 as possible. In a possible implementation, a difference between the first length and the second length is an integer multiple of one of 16, 32, 64, 128, or 256. Different CP lengths are set, so that a system is applicable to different environments, to perform functions of data transmission and sensing at different distances.

In a possible implementation, the second time unit is m/(first subcarrier spacing*first value), where the first subcarrier spacing is one of 480 kHz, 960 kHz, 1920 kHz, 3840 kHz, or 7680 kHz, the first value is one of 2048, 4096, 8192, 16384, or 32768, and m is 1 or a positive integer. A large subcarrier spacing is used, so that when the terminal device operates at a high frequency band, a larger bandwidth can be fully used without changing a quantity of subcarriers.

It should be understood that a value of the first subcarrier spacing is introduced to facilitate operation of the terminal device at a high frequency, and there is no limitation on selecting another value for the first subcarrier spacing herein. For example, the first subcarrier spacing may be one of 15 kHz, 30 kHz, 60 kHz, 120 kHz, 240 kHz, or 480 kHz.

In a possible implementation, a value of u is determined by using the first subcarrier spacing. For example, u = $log_2$ (firstsubcarrier spacing/15 *kHz*).

A quantity of second symbols in the first time unit is N1, and a quantity of third symbols in the first time unit is N2. The second symbol is a symbol that is of the plurality of first symbols and whose CP length is the product of the first length and the second time unit, and the third symbol is a symbol that is of the plurality of first symbols and whose CP length is the product of the second length and the second time unit. N1 and N2 are integers greater than or equal to 0. N=N1+N2. For example, if N1 is 0, it indicates that there is no second symbol in the first time unit, and all the symbols are the third symbols. For another example, N is 200, N1 is 120, and N2=N-N1=80.

In a possible implementation, there is no third symbol in the first time unit. In this case, N2 is 0, or there is no parameter N2. For example, the quantity of second symbols in the first time unit is N1, and the second symbol is the symbol that is of the plurality of first symbols and whose cyclic prefix length is the product of the first length and the second time unit, where N1 is an integer greater than or equal to 0. Optionally, in this case, N1 is equal to N. In a possible implementation, there is no second symbol in the first time unit. In this case, N1 is 0, or there is no parameter N1. For example, the quantity of third symbols in the first time unit is N2, and the third symbol is the symbol that is of the plurality of first symbols and whose cyclic prefix length is the product of the second length and the second time unit, where N2 is an integer greater than or equal to 0. Optionally, in this case, N2 is equal to N.

There are a plurality of possible implementations of locations of the second symbol and the third symbol in the first time unit.

Implementation 1: First N1 consecutive symbols in the first time unit are the second symbols, and last N2 consecutive symbols in the first time unit are the third symbols. In other words, symbols with one type of CP are at the front of the first time unit, and symbols with another type of CP are at the rear of the first time unit.

Implementation 2: First N3 consecutive symbols in the first time unit are second symbols, last N4 consecutive symbols in the first time unit are second symbols, and the N2 third symbols are consecutive in the first time unit, where N3+N4=N1. In other words, symbols with one type of CP are at the front and the rear of the first time unit, and symbols with another type of CP are in the middle of the first time unit.

Implementation 3: The first time unit includes consecutive third time units, a 1$^{st}$ symbol in the third time unit is the second symbol, and remaining symbols in the third time unit are floor(N1/N2) third symbols, where floor represents rounding down, and N1 is greater than N2. In other words, symbols with two types of CP lengths are spaced apart. It should be understood that the third time unit herein is merely used for ease of describing the locations of the second symbol and the third symbol in the first time unit, and the third time unit is not necessarily needed, provided that the second symbol and the third symbol are spaced apart herein. For example, if N1 is 40 and N2 is 80, in the first time unit, a 1$^{st}$ symbol is the second symbol, a 2$^{nd}$ symbol and a 3$^{rd}$ symbol are third symbols, a 4$^{th}$ symbol is the second symbol, a 5$^{th}$ symbol and a 6$^{th}$ symbol are third symbols, and so on. In addition, the locations of the second symbol and the third symbol may alternatively be interchanged, and this is also an implementation of this implementation. For example, the first time unit includes consecutive third time units, a 1$^{st}$ symbol in the third time unit is the third symbol, and remaining symbols in the third time unit are floor(N2/N1) second symbols, where floor represents rounding down, and N2 is greater than N1.

Implementation 4: If there are only symbols with one type of CP length, the symbols with the CP length are placed in sequence. For example, all the symbols in the first time unit are the second symbols, or all the symbols in the first time unit are the third symbols.

FIG. 5 is a diagram of the foregoing four implementations. In FIG. 5, in Implementation 1, the second symbols are at the front of the first time unit, and the third symbols are at the rear of the first time unit. In Implementation 2, the second symbols are at the front and the rear of the first time unit, and the third symbols are in the middle of the first time unit. In Implementation 3, the second symbols and the third symbols are spaced apart in the first time unit, where the 1$^{st}$ symbol in the first time unit is the second symbol, next floor(N2/N1)=3 symbols are third symbols, a next symbol is also the second symbol, and so on. In Implementation 3, because there are only the second symbols, the second symbols are placed in sequence.

One or more of N, u, the first length, the second length, the second time unit, the first subcarrier spacing, the first value, N1, or N2 may be predefined according to a protocol or configured by the network device.

In a possible implementation, the product of the first length and the second time unit is greater than 50 nanoseconds, and the product of the second length and the second time unit is greater than 50 nanoseconds. In this way, the CP lengths of the symbols in the first time unit are all greater than 50 nanoseconds, so that the CP lengths can meet a requirement of a multipath delay.

There may be a plurality of possible implementations for determining N1.

Implementation 1: A value of N1 may be one of 12, 8, 4, 2, 1, 7, 10, 13, or 6. In this way, if the first time unit can include 15 symbols without considering a CP, the foregoing value of N1 may be selected as a quantity of second symbols when the CP is considered.

Implementation 2: A value of N1 may be one of 2, 1, 12, 6, 3, 24, 20, 10, 5, 15, 16, 21, 17, 14, 26, 27, or 25. In this way, if the first time unit can include 30 symbols without considering a CP, the foregoing value of N1 may be selected as a quantity of second symbols when the CP is considered.

Implementation 3: A value of N1 may be one of 4, 25, 2, 24, 35, 12, 6, 9, 28, 14, 7, 27, 48, 26, 13, 31, 40, 20, 10, 45, 30, 42, 21, 36, 18, 32, 47, 16, 34, 43, 8, 41, 51, 39, 33, 5, 52, 54, or 55. In this way, if the first time unit can include 60 symbols without considering a CP, the foregoing value of N1 may be selected as a quantity of second symbols when the CP is considered.

Implementation 4: A value of N1 may be one of 8, 50, 71, 4, 48, 70, 24, 12, 18, 56, 75, 28, 61, 14, 54, 96, 52, 26, 62, 80, 89, 40, 69, 20, 84, 42, 21, 60, 30, 90, 95, 85, 93, 72, 87, 36, 64, 94, 99, 32, 68, 86, 16, 82, 45, 102, 105, 78, 66, 65, 10, 104, 108, 110, or 111. In this way, if the first time unit can include 120 symbols without considering a CP, the foregoing value of N1 may be selected as a quantity of second symbols when the CP is considered.

Implementation 5: A value of N1 may be one of 16, 100, 142, 163, 8, 96, 140, 48, 24, 174, 87, 138, 69, 129, 192, 104, 150, 173, 52, 124, 160, 178, 80, 40, 168, 183, 84, 141, 42, 120, 159, 60, 180, 190, 195, 170, 185, 186, 144, 189, 72, 171, 36, 128, 188, 198, 203, 64, 136, 172, 199, 32, 164, 112, 90, 204, 210, 213, 156, 132, 205, 130, 175, 20, 208, 216, 220, 222, 223, 105, 165, or 201. In this way, if the first time unit can include 240 symbols without considering a CP, the foregoing value of N1 may be selected as a quantity of second symbols when the CP is considered.

It should be noted that values of N1 and N2 may be interchanged. For example, in Implementation 1, the value of N1 may be one of 12, 8, 4, 2, 1, 7, 10, 13, or 6. The value of N2 may also be one of 12, 8, 4, 2, 1, 7, 10, 13, or 6.

There may be a plurality of possible implementations for determining N2.

Implementation 1: The value of N2 may be one of 0, 5, 9, 11, 12, 6, 3, 4, 2, 1, or 8. In this way, if the first time unit can include 15 symbols without considering a CP, the foregoing value of N2 may be selected as a quantity of third symbols when the CP is considered.

Implementation 2: The value of N2 may be one of 21, 22, 11, 17, 20, 0, 5, 15, 10, 18, 9, 24, 12, 6, 3, 8, 4, 2, 1, or 16. In this way, if the first time unit can include 30 symbols without considering a CP, the foregoing value of N2 may be selected as a quantity of third symbols when the CP is considered.

Implementation 3: The value of N2 may be one of 42, 21, 44, 22, 11, 34, 40, 38, 19, 33, 20, 0, 23, 36, 18, 9, 29, 39, 10, 5, 30, 15, 48, 24, 12, 6, 3, 35, 45, 50, 25, 16, 8, 4, 2, 1, 32, or 27. In this way, if the first time unit can include 60 symbols without considering a CP, the foregoing value of N2 may be selected as a quantity of third symbols when the CP is considered.

Implementation 4: The value of N2 may be one of 84, 42, 21, 88, 44, 22, 68, 80, 76, 38, 19, 66, 33, 40, 0, 46, 23, 72, 36, 18, 9, 58, 29, 78, 30, 15, 57, 39, 69, 20, 10, 5, 60, 11, 96, 48, 24, 12, 6, 3, 70, 35, 90, 45, 100, 50, 25, 32, 16, 8, 4, 2, 1, 64, 54, or 27. In this way, if the first time unit can include 120 symbols without considering a CP, the foregoing value of N2 may be selected as a quantity of third symbols when the CP is considered.

Implementation 5: The value of N2 may be one of 168, 84, 42, 21, 176, 88, 44, 136, 160, 15, 102, 51, 120, 60, 0, 92, 46, 23, 144, 72, 36, 18, 116, 58, 156, 30, 114, 57, 78, 39, 138, 40, 20, 10, 5, 80, 9, 132, 66, 33, 22, 192, 96, 48, 24, 12, 6, 3, 140, 70, 35, 180, 90, 45, 200, 100, 50, 25, 64, 32, 16, 8, 4, 2, 1, 128, 108, 54, or 27. In this way, if the first time unit can include 240 symbols without considering a CP, the foregoing value of N2 may be selected as a quantity of third symbols when the CP is considered.

It should be noted that the values of N1 and N2 may be interchanged. For example, in Implementation 1, the value of N2 may be one of 0, 5, 9, 11, 12, 6, 3, 4, 2, 1, or 8. The value of N1 may also be one of 0, 5, 9, 11, 12, 6, 3, 4, 2, 1, or 8.

N1 or N2 is determined in the foregoing manner, so that there can be different CP lengths in the first time unit, and transmission is applicable to different environments.

In a possible implementation, the first length may be one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232.

In a possible implementation, the second length may be one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360.

It should be noted that values of the first length and the second length may be interchanged. For example, as mentioned above, the first length may be one of 208, 256, or 272. The value of the second length may also be one of 208, 256, or 272. For another example, as mentioned above, the second length may be one of 224, 240, or 272, and the value of the first length may also be one of 224, 240, or 272.

The first length and the second length are set, to avoid a case in which a difference between the two CP lengths is excessively large, thereby facilitating system implementation. In addition, the two lengths are set, so that there is a specific difference between the two CP lengths. In this way, compatibility with different applications such as a sensing application and a communication application can be supported.

In a possible implementation, the values of the first length, the second length, N1, and N2 meet the following condition:

N1*CP length of the second symbol+N2*CP length of the third symbol=(N5-N1-N2)*duration other than a CP in the second symbol.

The duration other than the CP in the second symbol may be replaced with duration other than a CP in the third symbol, or may be replaced with duration other than a CP in the first symbol. N5 is an integer greater than or equal to N1+N2. N5 is a quantity of symbols in the first time unit without considering the CP. For example, N5 is one of 15, 30, 60, 120, or 240.

In a possible implementation, N5 is a number that is greater than or equal to N1+N2 and that is the smallest in 15, 30, 60, 120, or 240.

In the foregoing manner, CP lengths and a quantity of symbols with different CP lengths in the first time unit can be flexibly adjusted, to be applicable to different application scenarios, and ensure that the duration of the first time unit remains unchanged.

In a possible implementation, the values of N, the first length, the second length, N1, and N2 may be obtained from any row in Table 1. The first length is represented by a CP 1 in Table 1, and the second length is represented by a CP 2 in Table 1. Each row in Table 1 represents a possible value combination. For example, a 1st row in Table 1 represents that 12 symbols in the first time unit are all second symbols, and the first length corresponding to the second symbol is 1024. For another example, a 2nd row in Table 1 represents that a quantity of symbols in the first time unit is 13, where there are eight second symbols and five third symbols, the first length corresponding to the second symbol is 624, and the second length corresponding to the third symbol is 640. For another example, as shown in Table 1, N is 200, N1 is 80, N2 is 120, the first length is 800, and the second length is 832. For another example, as shown in Table 1, N is 200, N1 is 80, N2 is 120, the first length is 512, and the second length is 1024. It should be noted that values of N1 and N2 in Table 1 may be interchanged, and values of the CP 1 and the CP 2 may also be interchanged. For example, the 1st row in Table 1 may alternatively represent that N2 is 12, N1 is 0, the CP 2 is 1024, and the CP 1 is 1040, that is, the 12 symbols in the first time unit are all third symbols, and the second length corresponding to the third symbol is 1024. For another example, the 2nd row in Table 1 may alternatively represent that N2 is 8, N1 is 5, the CP 2 is 624, and the CP 1 is 640, that is, eight symbols in the first time unit are third symbols, five symbols are second symbols, the second length corresponding to the third symbol is 624, and the first length corresponding to the second symbol is 640.

Table 1

| N | N1 | N2 | CP 1 | CP 2 |
|---|---|---|---|---|
| 12 | 12 | 0 | 1024 | 1040 |
| 13 | 8 | 5 | 624 | 640 |
| 13 | 4 | 9 | 608 | 640 |
| 13 | 2 | 11 | 576 | 640 |
| 13 | 1 | 12 | 512 | 640 |
| 13 | 7 | 6 | 512 | 768 |
| 13 | 10 | 3 | 512 | 1024 |
| 14 | 10 | 4 | 288 | 304 |
| 14 | 13 | 1 | 288 | 352 |
| 14 | 6 | 8 | 256 | 320 |
| 14 | 10 | 4 | 256 | 384 |
| 14 | 12 | 2 | 256 | 512 |
| 14 | 13 | 1 | 256 | 768 |
| 23 | 2 | 21 | 1232 | 1248 |
| 23 | 1 | 22 | 1216 | 1248 |
| 23 | 12 | 11 | 1216 | 1280 |
| 23 | 6 | 17 | 1152 | 1280 |
| 23 | 3 | 20 | 1024 | 1280 |
| 24 | 24 | 0 | 1024 | 1040 |
| 25 | 20 | 5 | 816 | 832 |
| 25 | 10 | 15 | 800 | 832 |
| 25 | 5 | 20 | 768 | 832 |
| 25 | 15 | 10 | 768 | 896 |
| 25 | 20 | 5 | 768 | 1024 |
| 25 | 10 | 15 | 512 | 1024 |

(continued)

| N | N1 | N2 | CP 1 | CP 2 |
|---|---|---|---|---|
| 26 | 16 | 10 | 624 | 640 |
| 26 | 21 | 5 | 624 | 656 |
| 26 | 8 | 18 | 608 | 640 |
| 26 | 17 | 9 | 608 | 672 |
| 26 | 4 | 22 | 576 | 640 |
| 26 | 15 | 11 | 576 | 704 |
| 26 | 2 | 24 | 512 | 640 |
| 26 | 14 | 12 | 512 | 768 |
| 26 | 20 | 6 | 512 | 1024 |
| 27 | 15 | 12 | 448 | 464 |
| 27 | 21 | 6 | 448 | 480 |
| 27 | 24 | 3 | 448 | 512 |
| 27 | 12 | 15 | 384 | 512 |
| 27 | 6 | 21 | 256 | 512 |
| 28 | 20 | 8 | 288 | 304 |
| 28 | 24 | 4 | 288 | 320 |
| 28 | 26 | 2 | 288 | 352 |
| 28 | 27 | 1 | 288 | 416 |
| 28 | 12 | 16 | 256 | 320 |
| 28 | 20 | 8 | 256 | 384 |
| 28 | 24 | 4 | 256 | 512 |
| 28 | 26 | 2 | 256 | 768 |
| 28 | 27 | 1 | 256 | 1280 |
| 46 | 4 | 42 | 1232 | 1248 |
| 46 | 25 | 21 | 1232 | 1264 |
| 46 | 2 | 44 | 1216 | 1248 |
| 46 | 24 | 22 | 1216 | 1280 |
| 46 | 35 | 11 | 1216 | 1344 |
| 46 | 12 | 34 | 1152 | 1280 |
| 46 | 6 | 40 | 1024 | 1280 |
| 47 | 9 | 38 | 1120 | 1136 |
| 47 | 28 | 19 | 1120 | 1152 |
| 47 | 14 | 33 | 1088 | 1152 |
| 47 | 7 | 40 | 1024 | 1152 |
| 47 | 27 | 20 | 1024 | 1280 |
| 48 | 48 | 0 | 1024 | 1040 |
| 49 | 26 | 23 | 912 | 928 |
| 49 | 13 | 36 | 896 | 928 |
| 49 | 31 | 18 | 896 | 960 |

(continued)

| N | N1 | N2 | CP 1 | CP 2 |
|---|---|---|---|---|
| 49 | 40 | 9 | 896 | 1024 |
| 49 | 20 | 29 | 768 | 1024 |
| 49 | 10 | 39 | 512 | 1024 |
| 50 | 40 | 10 | 816 | 832 |
| 50 | 45 | 5 | 816 | 848 |
| 50 | 20 | 30 | 800 | 832 |
| 50 | 35 | 15 | 800 | 864 |
| 50 | 10 | 40 | 768 | 832 |
| 50 | 30 | 20 | 768 | 896 |
| 50 | 40 | 10 | 768 | 1024 |
| 50 | 45 | 5 | 768 | 1280 |
| 50 | 20 | 30 | 512 | 1024 |
| 51 | 42 | 9 | 720 | 736 |
| 51 | 21 | 30 | 704 | 736 |
| 51 | 36 | 15 | 704 | 768 |
| 51 | 18 | 33 | 640 | 768 |
| 51 | 9 | 42 | 512 | 768 |
| 51 | 30 | 21 | 512 | 1024 |
| 52 | 32 | 20 | 624 | 640 |
| 52 | 42 | 10 | 624 | 656 |
| 52 | 47 | 5 | 624 | 688 |
| 52 | 16 | 36 | 608 | 640 |
| 52 | 34 | 18 | 608 | 672 |
| 52 | 43 | 9 | 608 | 736 |
| 52 | 8 | 44 | 576 | 640 |
| 52 | 30 | 22 | 576 | 704 |
| 52 | 41 | 11 | 576 | 832 |
| 52 | 4 | 48 | 512 | 640 |
| 52 | 28 | 24 | 512 | 768 |
| 52 | 40 | 12 | 512 | 1024 |
| 54 | 30 | 24 | 448 | 464 |
| 54 | 42 | 12 | 448 | 480 |
| 54 | 48 | 6 | 448 | 512 |
| 54 | 51 | 3 | 448 | 576 |
| 54 | 24 | 30 | 384 | 512 |
| 54 | 39 | 15 | 384 | 640 |
| 54 | 12 | 42 | 256 | 512 |
| 54 | 33 | 21 | 256 | 768 |
| 55 | 40 | 15 | 368 | 384 |

(continued)

| N | N1 | N2 | CP 1 | CP 2 |
|---|---|---|---|---|
| 55 | 20 | 35 | 352 | 384 |
| 55 | 10 | 45 | 320 | 384 |
| 55 | 5 | 50 | 256 | 384 |
| 55 | 30 | 25 | 256 | 512 |
| 56 | 40 | 16 | 288 | 304 |
| 56 | 48 | 8 | 288 | 320 |
| 56 | 52 | 4 | 288 | 352 |
| 56 | 54 | 2 | 288 | 416 |
| 56 | 55 | 1 | 288 | 544 |
| 56 | 24 | 32 | 256 | 320 |
| 56 | 40 | 16 | 256 | 384 |
| 56 | 48 | 8 | 256 | 512 |
| 56 | 52 | 4 | 256 | 768 |
| 56 | 54 | 2 | 256 | 1280 |
| 57 | 30 | 27 | 208 | 224 |
| 92 | 8 | 84 | 1232 | 1248 |
| 92 | 50 | 42 | 1232 | 1264 |
| 92 | 71 | 21 | 1232 | 1296 |
| 92 | 4 | 88 | 1216 | 1248 |
| 92 | 48 | 44 | 1216 | 1280 |
| 92 | 70 | 22 | 1216 | 1344 |
| 92 | 24 | 68 | 1152 | 1280 |
| 92 | 12 | 80 | 1024 | 1280 |
| 94 | 18 | 76 | 1120 | 1136 |
| 94 | 56 | 38 | 1120 | 1152 |
| 94 | 75 | 19 | 1120 | 1184 |
| 94 | 28 | 66 | 1088 | 1152 |
| 94 | 61 | 33 | 1088 | 1216 |
| 94 | 14 | 80 | 1024 | 1152 |
| 94 | 54 | 40 | 1024 | 1280 |
| 96 | 96 | 0 | 1024 | 1040 |
| 98 | 52 | 46 | 912 | 928 |
| 98 | 75 | 23 | 912 | 944 |
| 98 | 26 | 72 | 896 | 928 |
| 98 | 62 | 36 | 896 | 960 |
| 98 | 80 | 18 | 896 | 1024 |
| 98 | 89 | 9 | 896 | 1152 |
| 98 | 40 | 58 | 768 | 1024 |
| 98 | 69 | 29 | 768 | 1280 |

(continued)

| N | N1 | N2 | CP 1 | CP 2 |
|---|---|---|---|---|
| 98 | 20 | 78 | 512 | 1024 |
| 99 | 69 | 30 | 864 | 880 |
| 99 | 84 | 15 | 864 | 896 |
| 99 | 42 | 57 | 832 | 896 |
| 99 | 21 | 78 | 768 | 896 |
| 99 | 60 | 39 | 768 | 1024 |
| 99 | 30 | 69 | 512 | 1024 |
| 100 | 80 | 20 | 816 | 832 |
| 100 | 90 | 10 | 816 | 848 |
| 100 | 95 | 5 | 816 | 880 |
| 100 | 40 | 60 | 800 | 832 |
| 100 | 70 | 30 | 800 | 864 |
| 100 | 85 | 15 | 800 | 928 |
| 100 | 20 | 80 | 768 | 832 |
| 100 | 60 | 40 | 768 | 896 |
| 100 | 80 | 20 | 768 | 1024 |
| 100 | 90 | 10 | 768 | 1280 |
| 100 | 40 | 60 | 512 | 1024 |
| 102 | 84 | 18 | 720 | 736 |
| 102 | 93 | 9 | 720 | 752 |
| 102 | 42 | 60 | 704 | 736 |
| 102 | 72 | 30 | 704 | 768 |
| 102 | 87 | 15 | 704 | 832 |
| 102 | 36 | 66 | 640 | 768 |
| 102 | 69 | 33 | 640 | 896 |
| 102 | 18 | 84 | 512 | 768 |
| 102 | 60 | 42 | 512 | 1024 |
| 104 | 64 | 40 | 624 | 640 |
| 104 | 84 | 20 | 624 | 656 |
| 104 | 94 | 10 | 624 | 688 |
| 104 | 99 | 5 | 624 | 752 |
| 104 | 32 | 72 | 608 | 640 |
| 104 | 68 | 36 | 608 | 672 |
| 104 | 86 | 18 | 608 | 736 |
| 104 | 95 | 9 | 608 | 864 |
| 104 | 16 | 88 | 576 | 640 |
| 104 | 60 | 44 | 576 | 704 |
| 104 | 82 | 22 | 576 | 832 |
| 104 | 93 | 11 | 576 | 1088 |

(continued)

| N | N1 | N2 | CP 1 | CP 2 |
|---|---|---|---|---|
| 104 | 8 | 96 | 512 | 640 |
| 104 | 56 | 48 | 512 | 768 |
| 104 | 80 | 24 | 512 | 1024 |
| 105 | 45 | 60 | 576 | 592 |
| 105 | 75 | 30 | 576 | 608 |
| 105 | 90 | 15 | 576 | 640 |
| 105 | 45 | 60 | 512 | 640 |
| 105 | 75 | 30 | 512 | 768 |
| 105 | 90 | 15 | 512 | 1024 |
| 108 | 60 | 48 | 448 | 464 |
| 108 | 84 | 24 | 448 | 480 |
| 108 | 96 | 12 | 448 | 512 |
| 108 | 102 | 6 | 448 | 576 |
| 108 | 105 | 3 | 448 | 704 |
| 108 | 48 | 60 | 384 | 512 |
| 108 | 78 | 30 | 384 | 640 |
| 108 | 93 | 15 | 384 | 896 |
| 108 | 24 | 84 | 256 | 512 |
| 108 | 66 | 42 | 256 | 768 |
| 108 | 87 | 21 | 256 | 1280 |
| 110 | 80 | 30 | 368 | 384 |
| 110 | 95 | 15 | 368 | 400 |
| 110 | 40 | 70 | 352 | 384 |
| 110 | 75 | 35 | 352 | 416 |
| 110 | 20 | 90 | 320 | 384 |
| 110 | 65 | 45 | 320 | 448 |
| 110 | 10 | 100 | 256 | 384 |
| 110 | 60 | 50 | 256 | 512 |
| 110 | 85 | 25 | 256 | 768 |
| 112 | 80 | 32 | 288 | 304 |
| 112 | 96 | 16 | 288 | 320 |
| 112 | 104 | 8 | 288 | 352 |
| 112 | 108 | 4 | 288 | 416 |
| 112 | 110 | 2 | 288 | 544 |
| 112 | 111 | 1 | 288 | 800 |
| 112 | 48 | 64 | 256 | 320 |
| 112 | 80 | 32 | 256 | 384 |
| 112 | 96 | 16 | 256 | 512 |
| 112 | 104 | 8 | 256 | 768 |

(continued)

| N | N1 | N2 | CP 1 | CP 2 |
|---|---|---|---|---|
| 112 | 108 | 4 | 256 | 1280 |
| 114 | 60 | 54 | 208 | 224 |
| 114 | 87 | 27 | 208 | 240 |
| 184 | 16 | 168 | 1232 | 1248 |
| 184 | 100 | 84 | 1232 | 1264 |
| 184 | 142 | 42 | 1232 | 1296 |
| 184 | 163 | 21 | 1232 | 1360 |
| 184 | 8 | 176 | 1216 | 1248 |
| 184 | 96 | 88 | 1216 | 1280 |
| 184 | 140 | 44 | 1216 | 1344 |
| 184 | 48 | 136 | 1152 | 1280 |
| 184 | 24 | 160 | 1024 | 1280 |
| 189 | 174 | 15 | 1104 | 1120 |
| 189 | 87 | 102 | 1088 | 1120 |
| 189 | 138 | 51 | 1088 | 1152 |
| 189 | 69 | 120 | 1024 | 1152 |
| 189 | 129 | 60 | 1024 | 1280 |
| 192 | 192 | 0 | 1024 | 1040 |
| 196 | 104 | 92 | 912 | 928 |
| 196 | 150 | 46 | 912 | 944 |
| 196 | 173 | 23 | 912 | 976 |
| 196 | 52 | 144 | 896 | 928 |
| 196 | 124 | 72 | 896 | 960 |
| 196 | 160 | 36 | 896 | 1024 |
| 196 | 178 | 18 | 896 | 1152 |
| 196 | 80 | 116 | 768 | 1024 |
| 196 | 138 | 58 | 768 | 1280 |
| 196 | 40 | 156 | 512 | 1024 |
| 198 | 138 | 60 | 864 | 880 |
| 198 | 168 | 30 | 864 | 896 |
| 198 | 183 | 15 | 864 | 928 |
| 198 | 84 | 114 | 832 | 896 |
| 198 | 141 | 57 | 832 | 960 |
| 198 | 42 | 156 | 768 | 896 |
| 198 | 120 | 78 | 768 | 1024 |
| 198 | 159 | 39 | 768 | 1280 |
| 198 | 60 | 138 | 512 | 1024 |
| 200 | 160 | 40 | 816 | 832 |
| 200 | 180 | 20 | 816 | 848 |

(continued)

| N | N1 | N2 | CP 1 | CP 2 |
|---|---|---|---|---|
| 200 | 190 | 10 | 816 | 880 |
| 200 | 195 | 5 | 816 | 944 |
| 200 | 80 | 120 | 800 | 832 |
| 200 | 140 | 60 | 800 | 864 |
| 200 | 170 | 30 | 800 | 928 |
| 200 | 185 | 15 | 800 | 1056 |
| 200 | 40 | 160 | 768 | 832 |
| 200 | 120 | 80 | 768 | 896 |
| 200 | 160 | 40 | 768 | 1024 |
| 200 | 180 | 20 | 768 | 1280 |
| 200 | 80 | 120 | 512 | 1024 |
| 204 | 168 | 36 | 720 | 736 |
| 204 | 186 | 18 | 720 | 752 |
| 204 | 195 | 9 | 720 | 784 |
| 204 | 84 | 120 | 704 | 736 |
| 204 | 144 | 60 | 704 | 768 |
| 204 | 174 | 30 | 704 | 832 |
| 204 | 189 | 15 | 704 | 960 |
| 204 | 72 | 132 | 640 | 768 |
| 204 | 138 | 66 | 640 | 896 |
| 204 | 171 | 33 | 640 | 1152 |
| 204 | 36 | 168 | 512 | 768 |
| 204 | 120 | 84 | 512 | 1024 |
| 208 | 128 | 80 | 624 | 640 |
| 208 | 168 | 40 | 624 | 656 |
| 208 | 188 | 20 | 624 | 688 |
| 208 | 198 | 10 | 624 | 752 |
| 208 | 203 | 5 | 624 | 880 |
| 208 | 64 | 144 | 608 | 640 |
| 208 | 136 | 72 | 608 | 672 |
| 208 | 172 | 36 | 608 | 736 |
| 208 | 190 | 18 | 608 | 864 |
| 208 | 199 | 9 | 608 | 1120 |
| 208 | 32 | 176 | 576 | 640 |
| 208 | 120 | 88 | 576 | 704 |
| 208 | 164 | 44 | 576 | 832 |
| 208 | 186 | 22 | 576 | 1088 |
| 208 | 16 | 192 | 512 | 640 |
| 208 | 112 | 96 | 512 | 768 |

(continued)

| N | N1 | N2 | CP 1 | CP 2 |
|---|---|---|---|---|
| 208 | 160 | 48 | 512 | 1024 |
| 210 | 90 | 120 | 576 | 592 |
| 210 | 150 | 60 | 576 | 608 |
| 210 | 180 | 30 | 576 | 640 |
| 210 | 195 | 15 | 576 | 704 |
| 210 | 90 | 120 | 512 | 640 |
| 210 | 150 | 60 | 512 | 768 |
| 210 | 180 | 30 | 512 | 1024 |
| 216 | 120 | 96 | 448 | 464 |
| 216 | 168 | 48 | 448 | 480 |
| 216 | 192 | 24 | 448 | 512 |
| 216 | 204 | 12 | 448 | 576 |
| 216 | 210 | 6 | 448 | 704 |
| 216 | 213 | 3 | 448 | 960 |
| 216 | 96 | 120 | 384 | 512 |
| 216 | 156 | 60 | 384 | 640 |
| 216 | 186 | 30 | 384 | 896 |
| 216 | 48 | 168 | 256 | 512 |
| 216 | 132 | 84 | 256 | 768 |
| 216 | 174 | 42 | 256 | 1280 |
| 220 | 160 | 60 | 368 | 384 |
| 220 | 190 | 30 | 368 | 400 |
| 220 | 205 | 15 | 368 | 432 |
| 220 | 80 | 140 | 352 | 384 |
| 220 | 150 | 70 | 352 | 416 |
| 220 | 185 | 35 | 352 | 480 |
| 220 | 40 | 180 | 320 | 384 |
| 220 | 130 | 90 | 320 | 448 |
| 220 | 175 | 45 | 320 | 576 |
| 220 | 20 | 200 | 256 | 384 |
| 220 | 120 | 100 | 256 | 512 |
| 220 | 170 | 50 | 256 | 768 |
| 220 | 195 | 25 | 256 | 1280 |
| 224 | 160 | 64 | 288 | 304 |
| 224 | 192 | 32 | 288 | 320 |
| 224 | 208 | 16 | 288 | 352 |
| 224 | 216 | 8 | 288 | 416 |
| 224 | 220 | 4 | 288 | 544 |
| 224 | 222 | 2 | 288 | 800 |

(continued)

| N | N1 | N2 | CP 1 | CP 2 |
|---|---|---|---|---|
| 224 | 223 | 1 | 288 | 1312 |
| 224 | 96 | 128 | 256 | 320 |
| 224 | 160 | 64 | 256 | 384 |
| 224 | 192 | 32 | 256 | 512 |
| 224 | 208 | 16 | 256 | 768 |
| 224 | 216 | 8 | 256 | 1280 |
| 225 | 210 | 15 | 272 | 288 |
| 225 | 105 | 120 | 256 | 288 |
| 225 | 165 | 60 | 256 | 320 |
| 225 | 195 | 30 | 256 | 384 |
| 225 | 210 | 15 | 256 | 512 |
| 228 | 120 | 108 | 208 | 224 |
| 228 | 174 | 54 | 208 | 240 |
| 228 | 201 | 27 | 208 | 272 |

The values of N, the first length, the second length, N1, and N2 are set together, to avoid a problem that duration of different first time units is not equal, and facilitate system implementation.

In a possible implementation, the values of N, the first length, the second length, N1, and N2 may be obtained from any row in Table 2 or Table 3. For specific implementation details, refer to the embodiment corresponding to Table 1. Details are not described herein again. The CP 1 and the CP 2 in Table 1 may be multiplied by a scaling factor to obtain different CP lengths. In this way, the terminal device and the network device can communicate with each other by using different precision or different quantities of sampling points, to be applicable to different application scenarios. For example, a CP 1 and a CP 2 in Table 2 may be obtained by multiplying the CP 1 and the CP 2 in Table 1 by 0.5, and N1 and N2 remain unchanged. For another example, a CP 1 and a CP 2 in Table 3 may be obtained by multiplying the CP 1 and the CP 2 in Table 1 by 2, and N1 and N2 remain unchanged.

Table 2

| N | N1 | N2 | CP 1 | CP 2 |
|---|---|---|---|---|
| 12 | 12 | 0 | 512 | 520 |
| 13 | 8 | 5 | 312 | 320 |
| 13 | 4 | 9 | 304 | 320 |
| 13 | 2 | 11 | 288 | 320 |
| 13 | 1 | 12 | 256 | 320 |
| 13 | 7 | 6 | 256 | 384 |
| 13 | 10 | 3 | 256 | 512 |
| 14 | 10 | 4 | 144 | 152 |
| 14 | 13 | 1 | 144 | 176 |
| 14 | 6 | 8 | 128 | 160 |
| 14 | 10 | 4 | 128 | 192 |
| 14 | 12 | 2 | 128 | 256 |
| 14 | 13 | 1 | 128 | 384 |
| 23 | 2 | 21 | 616 | 624 |
| 23 | 1 | 22 | 608 | 624 |

(continued)

| N | N1 | N2 | CP 1 | CP 2 |
|---|---|---|---|---|
| 23 | 12 | 11 | 608 | 640 |
| 23 | 6 | 17 | 576 | 640 |
| 23 | 3 | 20 | 512 | 640 |
| 24 | 24 | 0 | 512 | 520 |
| 25 | 20 | 5 | 408 | 416 |
| 25 | 10 | 15 | 400 | 416 |
| 25 | 5 | 20 | 384 | 416 |
| 25 | 15 | 10 | 384 | 448 |
| 25 | 20 | 5 | 384 | 512 |
| 25 | 10 | 15 | 256 | 512 |
| 26 | 16 | 10 | 312 | 320 |
| 26 | 21 | 5 | 312 | 328 |
| 26 | 8 | 18 | 304 | 320 |
| 26 | 17 | 9 | 304 | 336 |
| 26 | 4 | 22 | 288 | 320 |
| 26 | 15 | 11 | 288 | 352 |
| 26 | 2 | 24 | 256 | 320 |
| 26 | 14 | 12 | 256 | 384 |
| 26 | 20 | 6 | 256 | 512 |
| 27 | 15 | 12 | 224 | 232 |
| 27 | 21 | 6 | 224 | 240 |
| 27 | 24 | 3 | 224 | 256 |
| 27 | 12 | 15 | 192 | 256 |
| 27 | 6 | 21 | 128 | 256 |
| 28 | 20 | 8 | 144 | 152 |
| 28 | 24 | 4 | 144 | 160 |
| 28 | 26 | 2 | 144 | 176 |
| 28 | 27 | 1 | 144 | 208 |
| 28 | 12 | 16 | 128 | 160 |
| 28 | 20 | 8 | 128 | 192 |
| 28 | 24 | 4 | 128 | 256 |
| 28 | 26 | 2 | 128 | 384 |
| 28 | 27 | 1 | 128 | 640 |
| 46 | 4 | 42 | 616 | 624 |
| 46 | 25 | 21 | 616 | 632 |
| 46 | 2 | 44 | 608 | 624 |
| 46 | 24 | 22 | 608 | 640 |
| 46 | 35 | 11 | 608 | 672 |
| 46 | 12 | 34 | 576 | 640 |

(continued)

| N | N1 | N2 | CP 1 | CP 2 |
|---|---|---|---|---|
| 46 | 6 | 40 | 512 | 640 |
| 47 | 9 | 38 | 560 | 568 |
| 47 | 28 | 19 | 560 | 576 |
| 47 | 14 | 33 | 544 | 576 |
| 47 | 7 | 40 | 512 | 576 |
| 47 | 27 | 20 | 512 | 640 |
| 48 | 48 | 0 | 512 | 520 |
| 49 | 26 | 23 | 456 | 464 |
| 49 | 13 | 36 | 448 | 464 |
| 49 | 31 | 18 | 448 | 480 |
| 49 | 40 | 9 | 448 | 512 |
| 49 | 20 | 29 | 384 | 512 |
| 49 | 10 | 39 | 256 | 512 |
| 50 | 40 | 10 | 408 | 416 |
| 50 | 45 | 5 | 408 | 424 |
| 50 | 20 | 30 | 400 | 416 |
| 50 | 35 | 15 | 400 | 432 |
| 50 | 10 | 40 | 384 | 416 |
| 50 | 30 | 20 | 384 | 448 |
| 50 | 40 | 10 | 384 | 512 |
| 50 | 45 | 5 | 384 | 640 |
| 50 | 20 | 30 | 256 | 512 |
| 51 | 42 | 9 | 360 | 368 |
| 51 | 21 | 30 | 352 | 368 |
| 51 | 36 | 15 | 352 | 384 |
| 51 | 18 | 33 | 320 | 384 |
| 51 | 9 | 42 | 256 | 384 |
| 51 | 30 | 21 | 256 | 512 |
| 52 | 32 | 20 | 312 | 320 |
| 52 | 42 | 10 | 312 | 328 |
| 52 | 47 | 5 | 312 | 344 |
| 52 | 16 | 36 | 304 | 320 |
| 52 | 34 | 18 | 304 | 336 |
| 52 | 43 | 9 | 304 | 368 |
| 52 | 8 | 44 | 288 | 320 |
| 52 | 30 | 22 | 288 | 352 |
| 52 | 41 | 11 | 288 | 416 |
| 52 | 4 | 48 | 256 | 320 |
| 52 | 28 | 24 | 256 | 384 |

(continued)

| N | N1 | N2 | CP 1 | CP 2 |
|---|---|---|---|---|
| 52 | 40 | 12 | 256 | 512 |
| 54 | 30 | 24 | 224 | 232 |
| 54 | 42 | 12 | 224 | 240 |
| 54 | 48 | 6 | 224 | 256 |
| 54 | 51 | 3 | 224 | 288 |
| 54 | 24 | 30 | 192 | 256 |
| 54 | 39 | 15 | 192 | 320 |
| 54 | 12 | 42 | 128 | 256 |
| 54 | 33 | 21 | 128 | 384 |
| 55 | 40 | 15 | 184 | 192 |
| 55 | 20 | 35 | 176 | 192 |
| 55 | 10 | 45 | 160 | 192 |
| 55 | 5 | 50 | 128 | 192 |
| 55 | 30 | 25 | 128 | 256 |
| 56 | 40 | 16 | 144 | 152 |
| 56 | 48 | 8 | 144 | 160 |
| 56 | 52 | 4 | 144 | 176 |
| 56 | 54 | 2 | 144 | 208 |
| 56 | 55 | 1 | 144 | 272 |
| 56 | 24 | 32 | 128 | 160 |
| 56 | 40 | 16 | 128 | 192 |
| 56 | 48 | 8 | 128 | 256 |
| 56 | 52 | 4 | 128 | 384 |
| 56 | 54 | 2 | 128 | 640 |
| 57 | 30 | 27 | 104 | 112 |
| 92 | 8 | 84 | 616 | 624 |
| 92 | 50 | 42 | 616 | 632 |
| 92 | 71 | 21 | 616 | 648 |
| 92 | 4 | 88 | 608 | 624 |
| 92 | 48 | 44 | 608 | 640 |
| 92 | 70 | 22 | 608 | 672 |
| 92 | 24 | 68 | 576 | 640 |
| 92 | 12 | 80 | 512 | 640 |
| 94 | 18 | 76 | 560 | 568 |
| 94 | 56 | 38 | 560 | 576 |
| 94 | 75 | 19 | 560 | 592 |
| 94 | 28 | 66 | 544 | 576 |
| 94 | 61 | 33 | 544 | 608 |
| 94 | 14 | 80 | 512 | 576 |

(continued)

| N | N1 | N2 | CP 1 | CP 2 |
|---|---|---|---|---|
| 94 | 54 | 40 | 512 | 640 |
| 96 | 96 | 0 | 512 | 520 |
| 98 | 52 | 46 | 456 | 464 |
| 98 | 75 | 23 | 456 | 472 |
| 98 | 26 | 72 | 448 | 464 |
| 98 | 62 | 36 | 448 | 480 |
| 98 | 80 | 18 | 448 | 512 |
| 98 | 89 | 9 | 448 | 576 |
| 98 | 40 | 58 | 384 | 512 |
| 98 | 69 | 29 | 384 | 640 |
| 98 | 20 | 78 | 256 | 512 |
| 99 | 69 | 30 | 432 | 440 |
| 99 | 84 | 15 | 432 | 448 |
| 99 | 42 | 57 | 416 | 448 |
| 99 | 21 | 78 | 384 | 448 |
| 99 | 60 | 39 | 384 | 512 |
| 99 | 30 | 69 | 256 | 512 |
| 100 | 80 | 20 | 408 | 416 |
| 100 | 90 | 10 | 408 | 424 |
| 100 | 95 | 5 | 408 | 440 |
| 100 | 40 | 60 | 400 | 416 |
| 100 | 70 | 30 | 400 | 432 |
| 100 | 85 | 15 | 400 | 464 |
| 100 | 20 | 80 | 384 | 416 |
| 100 | 60 | 40 | 384 | 448 |
| 100 | 80 | 20 | 384 | 512 |
| 100 | 90 | 10 | 384 | 640 |
| 100 | 40 | 60 | 256 | 512 |
| 102 | 84 | 18 | 360 | 368 |
| 102 | 93 | 9 | 360 | 376 |
| 102 | 42 | 60 | 352 | 368 |
| 102 | 72 | 30 | 352 | 384 |
| 102 | 87 | 15 | 352 | 416 |
| 102 | 36 | 66 | 320 | 384 |
| 102 | 69 | 33 | 320 | 448 |
| 102 | 18 | 84 | 256 | 384 |
| 102 | 60 | 42 | 256 | 512 |
| 104 | 64 | 40 | 312 | 320 |
| 104 | 84 | 20 | 312 | 328 |

(continued)

| N | N1 | N2 | CP 1 | CP 2 |
|---|---|---|---|---|
| 104 | 94 | 10 | 312 | 344 |
| 104 | 99 | 5 | 312 | 376 |
| 104 | 32 | 72 | 304 | 320 |
| 104 | 68 | 36 | 304 | 336 |
| 104 | 86 | 18 | 304 | 368 |
| 104 | 95 | 9 | 304 | 432 |
| 104 | 16 | 88 | 288 | 320 |
| 104 | 60 | 44 | 288 | 352 |
| 104 | 82 | 22 | 288 | 416 |
| 104 | 93 | 11 | 288 | 544 |
| 104 | 8 | 96 | 256 | 320 |
| 104 | 56 | 48 | 256 | 384 |
| 104 | 80 | 24 | 256 | 512 |
| 105 | 45 | 60 | 288 | 296 |
| 105 | 75 | 30 | 288 | 304 |
| 105 | 90 | 15 | 288 | 320 |
| 105 | 45 | 60 | 256 | 320 |
| 105 | 75 | 30 | 256 | 384 |
| 105 | 90 | 15 | 256 | 512 |
| 108 | 60 | 48 | 224 | 232 |
| 108 | 84 | 24 | 224 | 240 |
| 108 | 96 | 12 | 224 | 256 |
| 108 | 102 | 6 | 224 | 288 |
| 108 | 105 | 3 | 224 | 352 |
| 108 | 48 | 60 | 192 | 256 |
| 108 | 78 | 30 | 192 | 320 |
| 108 | 93 | 15 | 192 | 448 |
| 108 | 24 | 84 | 128 | 256 |
| 108 | 66 | 42 | 128 | 384 |
| 108 | 87 | 21 | 128 | 640 |
| 110 | 80 | 30 | 184 | 192 |
| 110 | 95 | 15 | 184 | 200 |
| 110 | 40 | 70 | 176 | 192 |
| 110 | 75 | 35 | 176 | 208 |
| 110 | 20 | 90 | 160 | 192 |
| 110 | 65 | 45 | 160 | 224 |
| 110 | 10 | 100 | 128 | 192 |
| 110 | 60 | 50 | 128 | 256 |
| 110 | 85 | 25 | 128 | 384 |

(continued)

| N | N1 | N2 | CP 1 | CP 2 |
|---|---|---|---|---|
| 112 | 80 | 32 | 144 | 152 |
| 112 | 96 | 16 | 144 | 160 |
| 112 | 104 | 8 | 144 | 176 |
| 112 | 108 | 4 | 144 | 208 |
| 112 | 110 | 2 | 144 | 272 |
| 112 | 111 | 1 | 144 | 400 |
| 112 | 48 | 64 | 128 | 160 |
| 112 | 80 | 32 | 128 | 192 |
| 112 | 96 | 16 | 128 | 256 |
| 112 | 104 | 8 | 128 | 384 |
| 112 | 108 | 4 | 128 | 640 |
| 114 | 60 | 54 | 104 | 112 |
| 114 | 87 | 27 | 104 | 120 |
| 184 | 16 | 168 | 616 | 624 |
| 184 | 100 | 84 | 616 | 632 |
| 184 | 142 | 42 | 616 | 648 |
| 184 | 163 | 21 | 616 | 680 |
| 184 | 8 | 176 | 608 | 624 |
| 184 | 96 | 88 | 608 | 640 |
| 184 | 140 | 44 | 608 | 672 |
| 184 | 48 | 136 | 576 | 640 |
| 184 | 24 | 160 | 512 | 640 |
| 189 | 174 | 15 | 552 | 560 |
| 189 | 87 | 102 | 544 | 560 |
| 189 | 138 | 51 | 544 | 576 |
| 189 | 69 | 120 | 512 | 576 |
| 189 | 129 | 60 | 512 | 640 |
| 192 | 192 | 0 | 512 | 520 |
| 196 | 104 | 92 | 456 | 464 |
| 196 | 150 | 46 | 456 | 472 |
| 196 | 173 | 23 | 456 | 488 |
| 196 | 52 | 144 | 448 | 464 |
| 196 | 124 | 72 | 448 | 480 |
| 196 | 160 | 36 | 448 | 512 |
| 196 | 178 | 18 | 448 | 576 |
| 196 | 80 | 116 | 384 | 512 |
| 196 | 138 | 58 | 384 | 640 |
| 196 | 40 | 156 | 256 | 512 |
| 198 | 138 | 60 | 432 | 440 |

(continued)

| N | N1 | N2 | CP 1 | CP 2 |
|---|---|---|---|---|
| 198 | 168 | 30 | 432 | 448 |
| 198 | 183 | 15 | 432 | 464 |
| 198 | 84 | 114 | 416 | 448 |
| 198 | 141 | 57 | 416 | 480 |
| 198 | 42 | 156 | 384 | 448 |
| 198 | 120 | 78 | 384 | 512 |
| 198 | 159 | 39 | 384 | 640 |
| 198 | 60 | 138 | 256 | 512 |
| 200 | 160 | 40 | 408 | 416 |
| 200 | 180 | 20 | 408 | 424 |
| 200 | 190 | 10 | 408 | 440 |
| 200 | 195 | 5 | 408 | 472 |
| 200 | 80 | 120 | 400 | 416 |
| 200 | 140 | 60 | 400 | 432 |
| 200 | 170 | 30 | 400 | 464 |
| 200 | 185 | 15 | 400 | 528 |
| 200 | 40 | 160 | 384 | 416 |
| 200 | 120 | 80 | 384 | 448 |
| 200 | 160 | 40 | 384 | 512 |
| 200 | 180 | 20 | 384 | 640 |
| 200 | 80 | 120 | 256 | 512 |
| 204 | 168 | 36 | 360 | 368 |
| 204 | 186 | 18 | 360 | 376 |
| 204 | 195 | 9 | 360 | 392 |
| 204 | 84 | 120 | 352 | 368 |
| 204 | 144 | 60 | 352 | 384 |
| 204 | 174 | 30 | 352 | 416 |
| 204 | 189 | 15 | 352 | 480 |
| 204 | 72 | 132 | 320 | 384 |
| 204 | 138 | 66 | 320 | 448 |
| 204 | 171 | 33 | 320 | 576 |
| 204 | 36 | 168 | 256 | 384 |
| 204 | 120 | 84 | 256 | 512 |
| 208 | 128 | 80 | 312 | 320 |
| 208 | 168 | 40 | 312 | 328 |
| 208 | 188 | 20 | 312 | 344 |
| 208 | 198 | 10 | 312 | 376 |
| 208 | 203 | 5 | 312 | 440 |
| 208 | 64 | 144 | 304 | 320 |

(continued)

| N | N1 | N2 | CP 1 | CP 2 |
|---|---|---|---|---|
| 208 | 136 | 72 | 304 | 336 |
| 208 | 172 | 36 | 304 | 368 |
| 208 | 190 | 18 | 304 | 432 |
| 208 | 199 | 9 | 304 | 560 |
| 208 | 32 | 176 | 288 | 320 |
| 208 | 120 | 88 | 288 | 352 |
| 208 | 164 | 44 | 288 | 416 |
| 208 | 186 | 22 | 288 | 544 |
| 208 | 16 | 192 | 256 | 320 |
| 208 | 112 | 96 | 256 | 384 |
| 208 | 160 | 48 | 256 | 512 |
| 210 | 90 | 120 | 288 | 296 |
| 210 | 150 | 60 | 288 | 304 |
| 210 | 180 | 30 | 288 | 320 |
| 210 | 195 | 15 | 288 | 352 |
| 210 | 90 | 120 | 256 | 320 |
| 210 | 150 | 60 | 256 | 384 |
| 210 | 180 | 30 | 256 | 512 |
| 216 | 120 | 96 | 224 | 232 |
| 216 | 168 | 48 | 224 | 240 |
| 216 | 192 | 24 | 224 | 256 |
| 216 | 204 | 12 | 224 | 288 |
| 216 | 210 | 6 | 224 | 352 |
| 216 | 213 | 3 | 224 | 480 |
| 216 | 96 | 120 | 192 | 256 |
| 216 | 156 | 60 | 192 | 320 |
| 216 | 186 | 30 | 192 | 448 |
| 216 | 48 | 168 | 128 | 256 |
| 216 | 132 | 84 | 128 | 384 |
| 216 | 174 | 42 | 128 | 640 |
| 220 | 160 | 60 | 184 | 192 |
| 220 | 190 | 30 | 184 | 200 |
| 220 | 205 | 15 | 184 | 216 |
| 220 | 80 | 140 | 176 | 192 |
| 220 | 150 | 70 | 176 | 208 |
| 220 | 185 | 35 | 176 | 240 |
| 220 | 40 | 180 | 160 | 192 |
| 220 | 130 | 90 | 160 | 224 |
| 220 | 175 | 45 | 160 | 288 |

(continued)

| N | N1 | N2 | CP 1 | CP 2 |
|---|---|---|---|---|
| 220 | 20 | 200 | 128 | 192 |
| 220 | 120 | 100 | 128 | 256 |
| 220 | 170 | 50 | 128 | 384 |
| 220 | 195 | 25 | 128 | 640 |
| 224 | 160 | 64 | 144 | 152 |
| 224 | 192 | 32 | 144 | 160 |
| 224 | 208 | 16 | 144 | 176 |
| 224 | 216 | 8 | 144 | 208 |
| 224 | 220 | 4 | 144 | 272 |
| 224 | 222 | 2 | 144 | 400 |
| 224 | 223 | 1 | 144 | 656 |
| 224 | 96 | 128 | 128 | 160 |
| 224 | 160 | 64 | 128 | 192 |
| 224 | 192 | 32 | 128 | 256 |
| 224 | 208 | 16 | 128 | 384 |
| 224 | 216 | 8 | 128 | 640 |
| 225 | 210 | 15 | 136 | 144 |
| 225 | 105 | 120 | 128 | 144 |
| 225 | 165 | 60 | 128 | 160 |
| 225 | 195 | 30 | 128 | 192 |
| 225 | 210 | 15 | 128 | 256 |
| 228 | 120 | 108 | 104 | 112 |
| 228 | 174 | 54 | 104 | 120 |
| 228 | 201 | 27 | 104 | 136 |

Table 3

| N | N1 | N2 | CP 1 | CP 2 |
|---|---|---|---|---|
| 12 | 12 | 0 | 2048 | 2080 |
| 13 | 8 | 5 | 1248 | 1280 |
| 13 | 4 | 9 | 1216 | 1280 |
| 13 | 2 | 11 | 1152 | 1280 |
| 13 | 1 | 12 | 1024 | 1280 |
| 13 | 7 | 6 | 1024 | 1536 |
| 13 | 10 | 3 | 1024 | 2048 |
| 14 | 10 | 4 | 576 | 608 |
| 14 | 13 | 1 | 576 | 704 |
| 14 | 6 | 8 | 512 | 640 |
| 14 | 10 | 4 | 512 | 768 |
| 14 | 12 | 2 | 512 | 1024 |

(continued)

| N | N1 | N2 | CP 1 | CP 2 |
|---|---|---|---|---|
| 14 | 13 | 1 | 512 | 1536 |
| 23 | 2 | 21 | 2464 | 2496 |
| 23 | 1 | 22 | 2432 | 2496 |
| 23 | 12 | 11 | 2432 | 2560 |
| 23 | 6 | 17 | 2304 | 2560 |
| 23 | 3 | 20 | 2048 | 2560 |
| 24 | 24 | 0 | 2048 | 2080 |
| 25 | 20 | 5 | 1632 | 1664 |
| 25 | 10 | 15 | 1600 | 1664 |
| 25 | 5 | 20 | 1536 | 1664 |
| 25 | 15 | 10 | 1536 | 1792 |
| 25 | 20 | 5 | 1536 | 2048 |
| 25 | 10 | 15 | 1024 | 2048 |
| 26 | 16 | 10 | 1248 | 1280 |
| 26 | 21 | 5 | 1248 | 1312 |
| 26 | 8 | 18 | 1216 | 1280 |
| 26 | 17 | 9 | 1216 | 1344 |
| 26 | 4 | 22 | 1152 | 1280 |
| 26 | 15 | 11 | 1152 | 1408 |
| 26 | 2 | 24 | 1024 | 1280 |
| 26 | 14 | 12 | 1024 | 1536 |
| 26 | 20 | 6 | 1024 | 2048 |
| 27 | 15 | 12 | 896 | 928 |
| 27 | 21 | 6 | 896 | 960 |
| 27 | 24 | 3 | 896 | 1024 |
| 27 | 12 | 15 | 768 | 1024 |
| 27 | 6 | 21 | 512 | 1024 |
| 28 | 20 | 8 | 576 | 608 |
| 28 | 24 | 4 | 576 | 640 |
| 28 | 26 | 2 | 576 | 704 |
| 28 | 27 | 1 | 576 | 832 |
| 28 | 12 | 16 | 512 | 640 |
| 28 | 20 | 8 | 512 | 768 |
| 28 | 24 | 4 | 512 | 1024 |
| 28 | 26 | 2 | 512 | 1536 |
| 28 | 27 | 1 | 512 | 2560 |
| 46 | 4 | 42 | 2464 | 2496 |
| 46 | 25 | 21 | 2464 | 2528 |
| 46 | 2 | 44 | 2432 | 2496 |

(continued)

| N | N1 | N2 | CP 1 | CP 2 |
|---|---|---|---|---|
| 46 | 24 | 22 | 2432 | 2560 |
| 46 | 35 | 11 | 2432 | 2688 |
| 46 | 12 | 34 | 2304 | 2560 |
| 46 | 6 | 40 | 2048 | 2560 |
| 47 | 9 | 38 | 2240 | 2272 |
| 47 | 28 | 19 | 2240 | 2304 |
| 47 | 14 | 33 | 2176 | 2304 |
| 47 | 7 | 40 | 2048 | 2304 |
| 47 | 27 | 20 | 2048 | 2560 |
| 48 | 48 | 0 | 2048 | 2080 |
| 49 | 26 | 23 | 1824 | 1856 |
| 49 | 13 | 36 | 1792 | 1856 |
| 49 | 31 | 18 | 1792 | 1920 |
| 49 | 40 | 9 | 1792 | 2048 |
| 49 | 20 | 29 | 1536 | 2048 |
| 49 | 10 | 39 | 1024 | 2048 |
| 50 | 40 | 10 | 1632 | 1664 |
| 50 | 45 | 5 | 1632 | 1696 |
| 50 | 20 | 30 | 1600 | 1664 |
| 50 | 35 | 15 | 1600 | 1728 |
| 50 | 10 | 40 | 1536 | 1664 |
| 50 | 30 | 20 | 1536 | 1792 |
| 50 | 40 | 10 | 1536 | 2048 |
| 50 | 45 | 5 | 1536 | 2560 |
| 50 | 20 | 30 | 1024 | 2048 |
| 51 | 42 | 9 | 1440 | 1472 |
| 51 | 21 | 30 | 1408 | 1472 |
| 51 | 36 | 15 | 1408 | 1536 |
| 51 | 18 | 33 | 1280 | 1536 |
| 51 | 9 | 42 | 1024 | 1536 |
| 51 | 30 | 21 | 1024 | 2048 |
| 52 | 32 | 20 | 1248 | 1280 |
| 52 | 42 | 10 | 1248 | 1312 |
| 52 | 47 | 5 | 1248 | 1376 |
| 52 | 16 | 36 | 1216 | 1280 |
| 52 | 34 | 18 | 1216 | 1344 |
| 52 | 43 | 9 | 1216 | 1472 |
| 52 | 8 | 44 | 1152 | 1280 |
| 52 | 30 | 22 | 1152 | 1408 |

(continued)

| N | N1 | N2 | CP 1 | CP 2 |
|---|---|---|---|---|
| 52 | 41 | 11 | 1152 | 1664 |
| 52 | 4 | 48 | 1024 | 1280 |
| 52 | 28 | 24 | 1024 | 1536 |
| 52 | 40 | 12 | 1024 | 2048 |
| 54 | 30 | 24 | 896 | 928 |
| 54 | 42 | 12 | 896 | 960 |
| 54 | 48 | 6 | 896 | 1024 |
| 54 | 51 | 3 | 896 | 1152 |
| 54 | 24 | 30 | 768 | 1024 |
| 54 | 39 | 15 | 768 | 1280 |
| 54 | 12 | 42 | 512 | 1024 |
| 54 | 33 | 21 | 512 | 1536 |
| 55 | 40 | 15 | 736 | 768 |
| 55 | 20 | 35 | 704 | 768 |
| 55 | 10 | 45 | 640 | 768 |
| 55 | 5 | 50 | 512 | 768 |
| 55 | 30 | 25 | 512 | 1024 |
| 56 | 40 | 16 | 576 | 608 |
| 56 | 48 | 8 | 576 | 640 |
| 56 | 52 | 4 | 576 | 704 |
| 56 | 54 | 2 | 576 | 832 |
| 56 | 55 | 1 | 576 | 1088 |
| 56 | 24 | 32 | 512 | 640 |
| 56 | 40 | 16 | 512 | 768 |
| 56 | 48 | 8 | 512 | 1024 |
| 56 | 52 | 4 | 512 | 1536 |
| 56 | 54 | 2 | 512 | 2560 |
| 57 | 30 | 27 | 416 | 448 |
| 92 | 8 | 84 | 2464 | 2496 |
| 92 | 50 | 42 | 2464 | 2528 |
| 92 | 71 | 21 | 2464 | 2592 |
| 92 | 4 | 88 | 2432 | 2496 |
| 92 | 48 | 44 | 2432 | 2560 |
| 92 | 70 | 22 | 2432 | 2688 |
| 92 | 24 | 68 | 2304 | 2560 |
| 92 | 12 | 80 | 2048 | 2560 |
| 94 | 18 | 76 | 2240 | 2272 |
| 94 | 56 | 38 | 2240 | 2304 |
| 94 | 75 | 19 | 2240 | 2368 |

(continued)

| N | N1 | N2 | CP 1 | CP 2 |
|---|---|---|---|---|
| 94 | 28 | 66 | 2176 | 2304 |
| 94 | 61 | 33 | 2176 | 2432 |
| 94 | 14 | 80 | 2048 | 2304 |
| 94 | 54 | 40 | 2048 | 2560 |
| 96 | 96 | 0 | 2048 | 2080 |
| 98 | 52 | 46 | 1824 | 1856 |
| 98 | 75 | 23 | 1824 | 1888 |
| 98 | 26 | 72 | 1792 | 1856 |
| 98 | 62 | 36 | 1792 | 1920 |
| 98 | 80 | 18 | 1792 | 2048 |
| 98 | 89 | 9 | 1792 | 2304 |
| 98 | 40 | 58 | 1536 | 2048 |
| 98 | 69 | 29 | 1536 | 2560 |
| 98 | 20 | 78 | 1024 | 2048 |
| 99 | 69 | 30 | 1728 | 1760 |
| 99 | 84 | 15 | 1728 | 1792 |
| 99 | 42 | 57 | 1664 | 1792 |
| 99 | 21 | 78 | 1536 | 1792 |
| 99 | 60 | 39 | 1536 | 2048 |
| 99 | 30 | 69 | 1024 | 2048 |
| 100 | 80 | 20 | 1632 | 1664 |
| 100 | 90 | 10 | 1632 | 1696 |
| 100 | 95 | 5 | 1632 | 1760 |
| 100 | 40 | 60 | 1600 | 1664 |
| 100 | 70 | 30 | 1600 | 1728 |
| 100 | 85 | 15 | 1600 | 1856 |
| 100 | 20 | 80 | 1536 | 1664 |
| 100 | 60 | 40 | 1536 | 1792 |
| 100 | 80 | 20 | 1536 | 2048 |
| 100 | 90 | 10 | 1536 | 2560 |
| 100 | 40 | 60 | 1024 | 2048 |
| 102 | 84 | 18 | 1440 | 1472 |
| 102 | 93 | 9 | 1440 | 1504 |
| 102 | 42 | 60 | 1408 | 1472 |
| 102 | 72 | 30 | 1408 | 1536 |
| 102 | 87 | 15 | 1408 | 1664 |
| 102 | 36 | 66 | 1280 | 1536 |
| 102 | 69 | 33 | 1280 | 1792 |
| 102 | 18 | 84 | 1024 | 1536 |

(continued)

| N | N1 | N2 | CP 1 | CP 2 |
|---|---|---|---|---|
| 102 | 60 | 42 | 1024 | 2048 |
| 104 | 64 | 40 | 1248 | 1280 |
| 104 | 84 | 20 | 1248 | 1312 |
| 104 | 94 | 10 | 1248 | 1376 |
| 104 | 99 | 5 | 1248 | 1504 |
| 104 | 32 | 72 | 1216 | 1280 |
| 104 | 68 | 36 | 1216 | 1344 |
| 104 | 86 | 18 | 1216 | 1472 |
| 104 | 95 | 9 | 1216 | 1728 |
| 104 | 16 | 88 | 1152 | 1280 |
| 104 | 60 | 44 | 1152 | 1408 |
| 104 | 82 | 22 | 1152 | 1664 |
| 104 | 93 | 11 | 1152 | 2176 |
| 104 | 8 | 96 | 1024 | 1280 |
| 104 | 56 | 48 | 1024 | 1536 |
| 104 | 80 | 24 | 1024 | 2048 |
| 105 | 45 | 60 | 1152 | 1184 |
| 105 | 75 | 30 | 1152 | 1216 |
| 105 | 90 | 15 | 1152 | 1280 |
| 105 | 45 | 60 | 1024 | 1280 |
| 105 | 75 | 30 | 1024 | 1536 |
| 105 | 90 | 15 | 1024 | 2048 |
| 108 | 60 | 48 | 896 | 928 |
| 108 | 84 | 24 | 896 | 960 |
| 108 | 96 | 12 | 896 | 1024 |
| 108 | 102 | 6 | 896 | 1152 |
| 108 | 105 | 3 | 896 | 1408 |
| 108 | 48 | 60 | 768 | 1024 |
| 108 | 78 | 30 | 768 | 1280 |
| 108 | 93 | 15 | 768 | 1792 |
| 108 | 24 | 84 | 512 | 1024 |
| 108 | 66 | 42 | 512 | 1536 |
| 108 | 87 | 21 | 512 | 2560 |
| 110 | 80 | 30 | 736 | 768 |
| 110 | 95 | 15 | 736 | 800 |
| 110 | 40 | 70 | 704 | 768 |
| 110 | 75 | 35 | 704 | 832 |
| 110 | 20 | 90 | 640 | 768 |
| 110 | 65 | 45 | 640 | 896 |

(continued)

| N | N1 | N2 | CP 1 | CP 2 |
|---|---|---|---|---|
| 110 | 10 | 100 | 512 | 768 |
| 110 | 60 | 50 | 512 | 1024 |
| 110 | 85 | 25 | 512 | 1536 |
| 112 | 80 | 32 | 576 | 608 |
| 112 | 96 | 16 | 576 | 640 |
| 112 | 104 | 8 | 576 | 704 |
| 112 | 108 | 4 | 576 | 832 |
| 112 | 110 | 2 | 576 | 1088 |
| 112 | 111 | 1 | 576 | 1600 |
| 112 | 48 | 64 | 512 | 640 |
| 112 | 80 | 32 | 512 | 768 |
| 112 | 96 | 16 | 512 | 1024 |
| 112 | 104 | 8 | 512 | 1536 |
| 112 | 108 | 4 | 512 | 2560 |
| 114 | 60 | 54 | 416 | 448 |
| 114 | 87 | 27 | 416 | 480 |
| 184 | 16 | 168 | 2464 | 2496 |
| 184 | 100 | 84 | 2464 | 2528 |
| 184 | 142 | 42 | 2464 | 2592 |
| 184 | 163 | 21 | 2464 | 2720 |
| 184 | 8 | 176 | 2432 | 2496 |
| 184 | 96 | 88 | 2432 | 2560 |
| 184 | 140 | 44 | 2432 | 2688 |
| 184 | 48 | 136 | 2304 | 2560 |
| 184 | 24 | 160 | 2048 | 2560 |
| 189 | 174 | 15 | 2208 | 2240 |
| 189 | 87 | 102 | 2176 | 2240 |
| 189 | 138 | 51 | 2176 | 2304 |
| 189 | 69 | 120 | 2048 | 2304 |
| 189 | 129 | 60 | 2048 | 2560 |
| 192 | 192 | 0 | 2048 | 2080 |
| 196 | 104 | 92 | 1824 | 1856 |
| 196 | 150 | 46 | 1824 | 1888 |
| 196 | 173 | 23 | 1824 | 1952 |
| 196 | 52 | 144 | 1792 | 1856 |
| 196 | 124 | 72 | 1792 | 1920 |
| 196 | 160 | 36 | 1792 | 2048 |
| 196 | 178 | 18 | 1792 | 2304 |
| 196 | 80 | 116 | 1536 | 2048 |

(continued)

| N | N1 | N2 | CP 1 | CP 2 |
|---|---|---|---|---|
| 196 | 138 | 58 | 1536 | 2560 |
| 196 | 40 | 156 | 1024 | 2048 |
| 198 | 138 | 60 | 1728 | 1760 |
| 198 | 168 | 30 | 1728 | 1792 |
| 198 | 183 | 15 | 1728 | 1856 |
| 198 | 84 | 114 | 1664 | 1792 |
| 198 | 141 | 57 | 1664 | 1920 |
| 198 | 42 | 156 | 1536 | 1792 |
| 198 | 120 | 78 | 1536 | 2048 |
| 198 | 159 | 39 | 1536 | 2560 |
| 198 | 60 | 138 | 1024 | 2048 |
| 200 | 160 | 40 | 1632 | 1664 |
| 200 | 180 | 20 | 1632 | 1696 |
| 200 | 190 | 10 | 1632 | 1760 |
| 200 | 195 | 5 | 1632 | 1888 |
| 200 | 80 | 120 | 1600 | 1664 |
| 200 | 140 | 60 | 1600 | 1728 |
| 200 | 170 | 30 | 1600 | 1856 |
| 200 | 185 | 15 | 1600 | 2112 |
| 200 | 40 | 160 | 1536 | 1664 |
| 200 | 120 | 80 | 1536 | 1792 |
| 200 | 160 | 40 | 1536 | 2048 |
| 200 | 180 | 20 | 1536 | 2560 |
| 200 | 80 | 120 | 1024 | 2048 |
| 204 | 168 | 36 | 1440 | 1472 |
| 204 | 186 | 18 | 1440 | 1504 |
| 204 | 195 | 9 | 1440 | 1568 |
| 204 | 84 | 120 | 1408 | 1472 |
| 204 | 144 | 60 | 1408 | 1536 |
| 204 | 174 | 30 | 1408 | 1664 |
| 204 | 189 | 15 | 1408 | 1920 |
| 204 | 72 | 132 | 1280 | 1536 |
| 204 | 138 | 66 | 1280 | 1792 |
| 204 | 171 | 33 | 1280 | 2304 |
| 204 | 36 | 168 | 1024 | 1536 |
| 204 | 120 | 84 | 1024 | 2048 |
| 208 | 128 | 80 | 1248 | 1280 |
| 208 | 168 | 40 | 1248 | 1312 |
| 208 | 188 | 20 | 1248 | 1376 |

(continued)

| N | N1 | N2 | CP 1 | CP 2 |
|---|---|---|---|---|
| 208 | 198 | 10 | 1248 | 1504 |
| 208 | 203 | 5 | 1248 | 1760 |
| 208 | 64 | 144 | 1216 | 1280 |
| 208 | 136 | 72 | 1216 | 1344 |
| 208 | 172 | 36 | 1216 | 1472 |
| 208 | 190 | 18 | 1216 | 1728 |
| 208 | 199 | 9 | 1216 | 2240 |
| 208 | 32 | 176 | 1152 | 1280 |
| 208 | 120 | 88 | 1152 | 1408 |
| 208 | 164 | 44 | 1152 | 1664 |
| 208 | 186 | 22 | 1152 | 2176 |
| 208 | 16 | 192 | 1024 | 1280 |
| 208 | 112 | 96 | 1024 | 1536 |
| 208 | 160 | 48 | 1024 | 2048 |
| 210 | 90 | 120 | 1152 | 1184 |
| 210 | 150 | 60 | 1152 | 1216 |
| 210 | 180 | 30 | 1152 | 1280 |
| 210 | 195 | 15 | 1152 | 1408 |
| 210 | 90 | 120 | 1024 | 1280 |
| 210 | 150 | 60 | 1024 | 1536 |
| 210 | 180 | 30 | 1024 | 2048 |
| 216 | 120 | 96 | 896 | 928 |
| 216 | 168 | 48 | 896 | 960 |
| 216 | 192 | 24 | 896 | 1024 |
| 216 | 204 | 12 | 896 | 1152 |
| 216 | 210 | 6 | 896 | 1408 |
| 216 | 213 | 3 | 896 | 1920 |
| 216 | 96 | 120 | 768 | 1024 |
| 216 | 156 | 60 | 768 | 1280 |
| 216 | 186 | 30 | 768 | 1792 |
| 216 | 48 | 168 | 512 | 1024 |
| 216 | 132 | 84 | 512 | 1536 |
| 216 | 174 | 42 | 512 | 2560 |
| 220 | 160 | 60 | 736 | 768 |
| 220 | 190 | 30 | 736 | 800 |
| 220 | 205 | 15 | 736 | 864 |
| 220 | 80 | 140 | 704 | 768 |
| 220 | 150 | 70 | 704 | 832 |
| 220 | 185 | 35 | 704 | 960 |

(continued)

| N | N1 | N2 | CP 1 | CP 2 |
|---|---|---|---|---|
| 220 | 40 | 180 | 640 | 768 |
| 220 | 130 | 90 | 640 | 896 |
| 220 | 175 | 45 | 640 | 1152 |
| 220 | 20 | 200 | 512 | 768 |
| 220 | 120 | 100 | 512 | 1024 |
| 220 | 170 | 50 | 512 | 1536 |
| 220 | 195 | 25 | 512 | 2560 |
| 224 | 160 | 64 | 576 | 608 |
| 224 | 192 | 32 | 576 | 640 |
| 224 | 208 | 16 | 576 | 704 |
| 224 | 216 | 8 | 576 | 832 |
| 224 | 220 | 4 | 576 | 1088 |
| 224 | 222 | 2 | 576 | 1600 |
| 224 | 223 | 1 | 576 | 2624 |
| 224 | 96 | 128 | 512 | 640 |
| 224 | 160 | 64 | 512 | 768 |
| 224 | 192 | 32 | 512 | 1024 |
| 224 | 208 | 16 | 512 | 1536 |
| 224 | 216 | 8 | 512 | 2560 |
| 225 | 210 | 15 | 544 | 576 |
| 225 | 105 | 120 | 512 | 576 |
| 225 | 165 | 60 | 512 | 640 |
| 225 | 195 | 30 | 512 | 768 |
| 225 | 210 | 15 | 512 | 1024 |
| 228 | 120 | 108 | 416 | 448 |
| 228 | 174 | 54 | 416 | 480 |
| 228 | 201 | 27 | 416 | 544 |

In a possible implementation, the value of N may be one of 60, 63, 64, 66, 68, or 70.

In a possible implementation, the value of N1 may be one of 60, 15, 39, 51, 57, 30, 64, 32, 48, 56, 16, 40, 6, 36, 18, 42, 54, 44, 62, 65, 28, 58, 63, 24, 46, or 50.

In a possible implementation, the value of N2 may be one of 0, 48, 24, 12, 6, 3, 33, 32, 16, 8, 60, 30, 15, 40, 20, 10, 5, 44, 22, or 11.

In a possible implementation, the value of the first length may be one of 256, 288, 384, 416, 512, 544, 640, 704, 768, or 1024.

In a possible implementation, the value of the second length may be one of 304, 320, 352, 384, 432, 448, 480, 512, 544, 560, 576, 608, 640, 720, 768, 784, 800, 832, 896, 1024, 1040, 1152, or 1280.

In a possible implementation, the values of N, the first length, the second length, N1, and N2 may be obtained from any row in Table 4. For specific implementation details, refer to the embodiment corresponding to Table 1. Details are not described herein again.

Table 4

| N | N1 | N2 | CP 1 | CP 2 |
|---|---|---|---|---|
| 60 | 60 | 0 | 1024 | 1040 |
| 63 | 15 | 48 | 768 | 784 |
| 63 | 39 | 24 | 768 | 800 |
| 63 | 51 | 12 | 768 | 832 |
| 63 | 57 | 6 | 768 | 896 |
| 63 | 60 | 3 | 768 | 1024 |
| 63 | 30 | 33 | 512 | 1024 |
| 64 | 64 | 0 | 704 | 720 |
| 64 | 32 | 32 | 640 | 768 |
| 64 | 48 | 16 | 640 | 896 |
| 64 | 56 | 8 | 640 | 1152 |
| 64 | 16 | 48 | 512 | 768 |
| 64 | 40 | 24 | 512 | 1024 |
| 66 | 6 | 60 | 544 | 560 |
| 66 | 36 | 30 | 544 | 576 |
| 66 | 51 | 15 | 544 | 608 |
| 66 | 18 | 48 | 512 | 576 |
| 66 | 42 | 24 | 512 | 640 |
| 66 | 54 | 12 | 512 | 768 |
| 66 | 60 | 6 | 512 | 1024 |
| 68 | 44 | 24 | 416 | 432 |
| 68 | 56 | 12 | 416 | 448 |
| 68 | 62 | 6 | 416 | 480 |
| 68 | 65 | 3 | 416 | 544 |
| 68 | 28 | 40 | 384 | 448 |
| 68 | 48 | 20 | 384 | 512 |
| 68 | 58 | 10 | 384 | 640 |
| 68 | 63 | 5 | 384 | 896 |
| 68 | 24 | 44 | 256 | 512 |
| 68 | 46 | 22 | 256 | 768 |
| 68 | 57 | 11 | 256 | 1280 |
| 70 | 50 | 20 | 288 | 304 |
| 70 | 60 | 10 | 288 | 320 |
| 70 | 65 | 5 | 288 | 352 |
| 70 | 30 | 40 | 256 | 320 |
| 70 | 50 | 20 | 256 | 384 |
| 70 | 60 | 10 | 256 | 512 |
| 70 | 65 | 5 | 256 | 768 |

In this way, if the first time unit can include 75 symbols without considering a CP, the foregoing value of N may be selected as a quantity of symbols when the CP is considered, the foregoing value of N1 may be selected as a quantity of second symbols when the CP is considered, the foregoing value of N2 may be selected as a quantity of third symbols when the CP is considered, and the foregoing values may be selected as the first length and the second length when the CP is considered.

In a possible implementation, the value of N may be one of 120, 126, 128, 132, 135, 136, or 140.

In a possible implementation, the value of N1 may be one of 120, 30, 78, 102, 114, 123, 60, 128, 64, 96, 112, 32, 80, 12, 72, 117, 36, 84, 108, 75, 105, 88, 124, 130, 133, 56, 116, 126, 48, 92, 100, or 135.

In a possible implementation, the value of N2 may be one of 0, 96, 48, 24, 12, 6, 3, 66, 64, 32, 16, 120, 60, 30, 15, 75, 105, 80, 40, 20, 10, 88, 44, 22, or 5.

In a possible implementation, the value of the first length may be one of 256, 288, 384, 416, 448, 512, 544, 640, 704, 768, or 1024.

In a possible implementation, the value of the second length may be one of 304, 320, 352, 384, 416, 432, 448, 464, 480, 512, 544, 560, 576, 608, 640, 672, 720, 768, 784, 800, 832, 896, 1024, 1040, 1152, or 1280.

In a possible implementation, the values of N, the first length, the second length, N1, and N2 may be obtained from any row in Table 5. For specific implementation details, refer to the embodiment corresponding to Table 1. Details are not described herein again.

Table 5

| N | N1 | N2 | CP 1 | CP 2 |
|---|---|---|---|---|
| 120 | 120 | 0 | 1024 | 1040 |
| 126 | 30 | 96 | 768 | 784 |
| 126 | 78 | 48 | 768 | 800 |
| 126 | 102 | 24 | 768 | 832 |
| 126 | 114 | 12 | 768 | 896 |
| 126 | 120 | 6 | 768 | 1024 |
| 126 | 123 | 3 | 768 | 1280 |
| 126 | 60 | 66 | 512 | 1024 |
| 128 | 128 | 0 | 704 | 720 |
| 128 | 64 | 64 | 640 | 768 |
| 128 | 96 | 32 | 640 | 896 |
| 128 | 112 | 16 | 640 | 1152 |
| 128 | 32 | 96 | 512 | 768 |
| 128 | 80 | 48 | 512 | 1024 |
| 132 | 12 | 120 | 544 | 560 |
| 132 | 72 | 60 | 544 | 576 |
| 132 | 102 | 30 | 544 | 608 |
| 132 | 117 | 15 | 544 | 672 |
| 132 | 36 | 96 | 512 | 576 |
| 132 | 84 | 48 | 512 | 640 |
| 132 | 108 | 24 | 512 | 768 |
| 132 | 120 | 12 | 512 | 1024 |
| 135 | 75 | 60 | 448 | 464 |
| 135 | 105 | 30 | 448 | 480 |
| 135 | 120 | 15 | 448 | 512 |
| 135 | 60 | 75 | 384 | 512 |
| 135 | 30 | 105 | 256 | 512 |

(continued)

| N | N1 | N2 | CP 1 | CP 2 |
|---|---|---|---|---|
| 136 | 88 | 48 | 416 | 432 |
| 136 | 112 | 24 | 416 | 448 |
| 136 | 124 | 12 | 416 | 480 |
| 136 | 130 | 6 | 416 | 544 |
| 136 | 133 | 3 | 416 | 672 |
| 136 | 56 | 80 | 384 | 448 |
| 136 | 96 | 40 | 384 | 512 |
| 136 | 116 | 20 | 384 | 640 |
| 136 | 126 | 10 | 384 | 896 |
| 136 | 48 | 88 | 256 | 512 |
| 136 | 92 | 44 | 256 | 768 |
| 136 | 114 | 22 | 256 | 1280 |
| 140 | 100 | 40 | 288 | 304 |
| 140 | 120 | 20 | 288 | 320 |
| 140 | 130 | 10 | 288 | 352 |
| 140 | 135 | 5 | 288 | 416 |
| 140 | 60 | 80 | 256 | 320 |
| 140 | 100 | 40 | 256 | 384 |
| 140 | 120 | 20 | 256 | 512 |
| 140 | 130 | 10 | 256 | 768 |
| 140 | 135 | 5 | 256 | 1280 |

In this way, if the first time unit can include 150 symbols without considering a CP, the foregoing value of N may be selected as a quantity of symbols when the CP is considered, the foregoing value of N1 may be selected as a quantity of second symbols when the CP is considered, the foregoing value of N2 may be selected as a quantity of third symbols when the CP is considered, and the foregoing values may be selected as the first length and the second length when the CP is considered.

In a possible implementation, the value of N may be one of 228, 232, 233, 234, 236, 238, 240, 242, 243, 244, 245, 246, 248, 250, 252, 255, 256, 258, 260, 261, 264, 266, 268, 270, 272, 273, 275, 276, 279, 280, 282, 284, or 285.

In a possible implementation, the value of N1 may be one of 36, 132, 180, 224, 228, 230, 231, 112, 172, 202, 56, 144, 72, 90, 45, 139, 186, 93, 210, 222, 114, 136, 211, 68, 152, 194, 215, 76, 156, 74, 197, 78, 158, 198, 240, 199, 160, 201, 80, 161, 40, 141, 20, 237, 120, 60, 30, 221, 162, 130, 65, 155, 200, 100, 50, 234, 243, 183, 164, 206, 227, 196, 235, 204, 225, 175, 150, 246, 105, 256, 128, 192, 64, 84, 171, 42, 102, 170, 205, 140, 195, 57, 159, 24, 249, 168, 216, 218, 242, 254, 260, 116, 96, 182, 48, 213, 146, 207, 255, 165, 176, 248, 266, 269, 232, 252, 184, 25, 258, 267, 51, 270, 275, 276, or 279.

In a possible implementation, the value of N2 may be one of 192, 96, 48, 8, 4, 2, 1, 120, 60, 30, 176, 88, 160, 143, 188, 94, 47, 140, 24, 12, 6, 100, 50, 25, 168, 84, 42, 21, 80, 164, 82, 41, 40, 0, 86, 43, 162, 81, 202, 101, 222, 3, 123, 183, 213, 184, 92, 46, 23, 204, 115, 180, 90, 45, 145, 195, 126, 63, 186, 208, 104, 52, 26, 13, 44, 150, 75, 200, 132, 165, 210, 105, 128, 64, 32, 174, 87, 216, 108, 54, 27, 156, 78, 220, 110, 55, 240, 66, 33, 147, 102, 51, 15, 152, 76, 38, 19, 172, 244, 122, 61, 20, 159, 175, 225, 250, 125, 72, 36, 18, 9, 39, 177, 228, 114, 57, 10, 5, or 135.

In a possible implementation, the value of the first length may be one of 208, 224, 256, 288, 304, 320, 352, 368, 384, 400, 416, 448, 480, 512, 544, 576, 608, 624, 640, 656, 704, 720, 768, 800, 816, 832, 848, 896, 912, 928, 960, 976, 1024, 1056, 1088, 1104, 1152, 1168, 1184, 1200, or 1280.

In a possible implementation, the value of the second length may be one of 224, 240, 256, 272, 288, 304, 320, 352, 368, 384, 416, 432, 448, 464, 480, 496, 512, 528, 544, 560, 576, 608, 624, 640, 656, 672, 688, 704, 720, 736, 768, 784, 800, 832, 848, 864, 880, 896, 912, 928, 944, 960, 976, 992, 1008, 1024, 1040, 1056, 1072, 1088, 1120, 1136, 1152, 1168, 1184, 1216, 1232, 1248, 1264, 1280, 1296, 1312, 1328, or 1344.

In a possible implementation, the values of N, the first length, the second length, N1, and N2 may be obtained from any row in Table 6. For specific implementation details, refer to the embodiment corresponding to Table 1. Details are not described herein again.

Table 6

| N | N1 | N2 | CP 1 | CP 2 |
|---|---|---|---|---|
| 228 | 36 | 192 | 1280 | 1296 |
| 228 | 132 | 96 | 1280 | 1312 |
| 228 | 180 | 48 | 1280 | 1344 |
| 232 | 224 | 8 | 1200 | 1216 |
| 232 | 228 | 4 | 1200 | 1232 |
| 232 | 230 | 2 | 1200 | 1264 |
| 232 | 231 | 1 | 1200 | 1328 |
| 232 | 112 | 120 | 1184 | 1216 |
| 232 | 172 | 60 | 1184 | 1248 |
| 232 | 202 | 30 | 1184 | 1312 |
| 232 | 56 | 176 | 1152 | 1216 |
| 232 | 144 | 88 | 1152 | 1280 |
| 232 | 72 | 160 | 1024 | 1280 |
| 233 | 90 | 143 | 1168 | 1184 |
| 233 | 45 | 188 | 1152 | 1184 |
| 233 | 139 | 94 | 1152 | 1216 |
| 233 | 186 | 47 | 1152 | 1280 |
| 233 | 93 | 140 | 1024 | 1280 |
| 234 | 186 | 48 | 1152 | 1168 |
| 234 | 210 | 24 | 1152 | 1184 |
| 234 | 222 | 12 | 1152 | 1216 |
| 234 | 228 | 6 | 1152 | 1280 |
| 234 | 114 | 120 | 1024 | 1280 |
| 236 | 136 | 100 | 1104 | 1120 |
| 236 | 186 | 50 | 1104 | 1136 |
| 236 | 211 | 25 | 1104 | 1168 |
| 236 | 68 | 168 | 1088 | 1120 |
| 236 | 152 | 84 | 1088 | 1152 |
| 236 | 194 | 42 | 1088 | 1216 |
| 236 | 215 | 21 | 1088 | 1344 |
| 236 | 76 | 160 | 1024 | 1152 |
| 236 | 156 | 80 | 1024 | 1280 |
| 238 | 74 | 164 | 1056 | 1072 |
| 238 | 156 | 82 | 1056 | 1088 |
| 238 | 197 | 41 | 1056 | 1120 |
| 238 | 78 | 160 | 1024 | 1088 |

(continued)

| N | N1 | N2 | CP 1 | CP 2 |
|---|---|---|---|---|
| 238 | 158 | 80 | 1024 | 1152 |
| 238 | 198 | 40 | 1024 | 1280 |
| 240 | 240 | 0 | 1024 | 1040 |
| 242 | 156 | 86 | 976 | 992 |
| 242 | 199 | 43 | 976 | 1008 |
| 242 | 78 | 164 | 960 | 992 |
| 242 | 160 | 82 | 960 | 1024 |
| 242 | 201 | 41 | 960 | 1088 |
| 242 | 80 | 162 | 896 | 1024 |
| 242 | 161 | 81 | 896 | 1152 |
| 242 | 40 | 202 | 768 | 1024 |
| 242 | 141 | 101 | 768 | 1280 |
| 242 | 20 | 222 | 512 | 1024 |
| 243 | 231 | 12 | 960 | 976 |
| 243 | 237 | 6 | 960 | 992 |
| 243 | 240 | 3 | 960 | 1024 |
| 243 | 120 | 123 | 896 | 1024 |
| 243 | 60 | 183 | 768 | 1024 |
| 243 | 30 | 213 | 512 | 1024 |
| 244 | 60 | 184 | 928 | 944 |
| 244 | 152 | 92 | 928 | 960 |
| 244 | 198 | 46 | 928 | 992 |
| 244 | 221 | 23 | 928 | 1056 |
| 244 | 76 | 168 | 896 | 960 |
| 244 | 160 | 84 | 896 | 1024 |
| 244 | 202 | 42 | 896 | 1152 |
| 244 | 80 | 164 | 768 | 1024 |
| 244 | 162 | 82 | 768 | 1280 |
| 244 | 40 | 204 | 512 | 1024 |
| 245 | 130 | 115 | 912 | 928 |
| 245 | 65 | 180 | 896 | 928 |
| 245 | 155 | 90 | 896 | 960 |
| 245 | 200 | 45 | 896 | 1024 |
| 245 | 100 | 145 | 768 | 1024 |
| 245 | 50 | 195 | 512 | 1024 |
| 246 | 198 | 48 | 896 | 912 |
| 246 | 222 | 24 | 896 | 928 |
| 246 | 234 | 12 | 896 | 960 |
| 246 | 240 | 6 | 896 | 1024 |

(continued)

| N | N1 | N2 | CP 1 | CP 2 |
|---|---|---|---|---|
| 246 | 243 | 3 | 896 | 1152 |
| 246 | 120 | 126 | 768 | 1024 |
| 246 | 183 | 63 | 768 | 1280 |
| 246 | 60 | 186 | 512 | 1024 |
| 248 | 80 | 168 | 848 | 864 |
| 248 | 164 | 84 | 848 | 880 |
| 248 | 206 | 42 | 848 | 912 |
| 248 | 227 | 21 | 848 | 976 |
| 248 | 40 | 208 | 832 | 864 |
| 248 | 144 | 104 | 832 | 896 |
| 248 | 196 | 52 | 832 | 960 |
| 248 | 222 | 26 | 832 | 1088 |
| 248 | 235 | 13 | 832 | 1344 |
| 248 | 72 | 176 | 768 | 896 |
| 248 | 160 | 88 | 768 | 1024 |
| 248 | 204 | 44 | 768 | 1280 |
| 248 | 80 | 168 | 512 | 1024 |
| 250 | 200 | 50 | 816 | 832 |
| 250 | 225 | 25 | 816 | 848 |
| 250 | 100 | 150 | 800 | 832 |
| 250 | 175 | 75 | 800 | 864 |
| 250 | 50 | 200 | 768 | 832 |
| 250 | 150 | 100 | 768 | 896 |
| 250 | 200 | 50 | 768 | 1024 |
| 250 | 225 | 25 | 768 | 1280 |
| 250 | 100 | 150 | 512 | 1024 |
| 252 | 60 | 192 | 768 | 784 |
| 252 | 156 | 96 | 768 | 800 |
| 252 | 204 | 48 | 768 | 832 |
| 252 | 228 | 24 | 768 | 896 |
| 252 | 240 | 12 | 768 | 1024 |
| 252 | 246 | 6 | 768 | 1280 |
| 252 | 120 | 132 | 512 | 1024 |
| 255 | 210 | 45 | 720 | 736 |
| 255 | 105 | 150 | 704 | 736 |
| 255 | 180 | 75 | 704 | 768 |
| 255 | 90 | 165 | 640 | 768 |
| 255 | 45 | 210 | 512 | 768 |
| 255 | 150 | 105 | 512 | 1024 |

(continued)

| N | N1 | N2 | CP 1 | CP 2 |
|---|---|---|---|---|
| 256 | 256 | 0 | 704 | 720 |
| 256 | 128 | 128 | 640 | 768 |
| 256 | 192 | 64 | 640 | 896 |
| 256 | 224 | 32 | 640 | 1152 |
| 256 | 64 | 192 | 512 | 768 |
| 256 | 160 | 96 | 512 | 1024 |
| 258 | 84 | 174 | 656 | 672 |
| 258 | 171 | 87 | 656 | 688 |
| 258 | 42 | 216 | 640 | 672 |
| 258 | 150 | 108 | 640 | 704 |
| 258 | 204 | 54 | 640 | 768 |
| 258 | 231 | 27 | 640 | 896 |
| 258 | 102 | 156 | 512 | 768 |
| 258 | 180 | 78 | 512 | 1024 |
| 260 | 160 | 100 | 624 | 640 |
| 260 | 210 | 50 | 624 | 656 |
| 260 | 235 | 25 | 624 | 688 |
| 260 | 80 | 180 | 608 | 640 |
| 260 | 170 | 90 | 608 | 672 |
| 260 | 215 | 45 | 608 | 736 |
| 260 | 40 | 220 | 576 | 640 |
| 260 | 150 | 110 | 576 | 704 |
| 260 | 205 | 55 | 576 | 832 |
| 260 | 20 | 240 | 512 | 640 |
| 260 | 140 | 120 | 512 | 768 |
| 260 | 200 | 60 | 512 | 1024 |
| 261 | 195 | 66 | 608 | 624 |
| 261 | 228 | 33 | 608 | 640 |
| 261 | 114 | 147 | 576 | 640 |
| 261 | 57 | 204 | 512 | 640 |
| 261 | 159 | 102 | 512 | 768 |
| 261 | 210 | 51 | 512 | 1024 |
| 264 | 24 | 240 | 544 | 560 |
| 264 | 144 | 120 | 544 | 576 |
| 264 | 204 | 60 | 544 | 608 |
| 264 | 234 | 30 | 544 | 672 |
| 264 | 249 | 15 | 544 | 800 |
| 264 | 72 | 192 | 512 | 576 |
| 264 | 168 | 96 | 512 | 640 |

(continued)

| N | N1 | N2 | CP 1 | CP 2 |
|---|---|---|---|---|
| 264 | 216 | 48 | 512 | 768 |
| 264 | 240 | 24 | 512 | 1024 |
| 266 | 74 | 192 | 512 | 528 |
| 266 | 170 | 96 | 512 | 544 |
| 266 | 218 | 48 | 512 | 576 |
| 266 | 242 | 24 | 512 | 640 |
| 266 | 254 | 12 | 512 | 768 |
| 266 | 260 | 6 | 512 | 1024 |
| 268 | 116 | 152 | 480 | 496 |
| 268 | 192 | 76 | 480 | 512 |
| 268 | 230 | 38 | 480 | 544 |
| 268 | 249 | 19 | 480 | 608 |
| 268 | 96 | 172 | 448 | 512 |
| 268 | 182 | 86 | 448 | 576 |
| 268 | 225 | 43 | 448 | 704 |
| 268 | 48 | 220 | 384 | 512 |
| 268 | 158 | 110 | 384 | 640 |
| 268 | 213 | 55 | 384 | 896 |
| 268 | 24 | 244 | 256 | 512 |
| 268 | 146 | 122 | 256 | 768 |
| 268 | 207 | 61 | 256 | 1280 |
| 270 | 150 | 120 | 448 | 464 |
| 270 | 210 | 60 | 448 | 480 |
| 270 | 240 | 30 | 448 | 512 |
| 270 | 255 | 15 | 448 | 576 |
| 270 | 120 | 150 | 384 | 512 |
| 270 | 195 | 75 | 384 | 640 |
| 270 | 60 | 210 | 256 | 512 |
| 270 | 165 | 105 | 256 | 768 |
| 272 | 176 | 96 | 416 | 432 |
| 272 | 224 | 48 | 416 | 448 |
| 272 | 248 | 24 | 416 | 480 |
| 272 | 260 | 12 | 416 | 544 |
| 272 | 266 | 6 | 416 | 672 |
| 272 | 269 | 3 | 416 | 928 |
| 272 | 112 | 160 | 384 | 448 |
| 272 | 192 | 80 | 384 | 512 |
| 272 | 232 | 40 | 384 | 640 |
| 272 | 252 | 20 | 384 | 896 |

(continued)

| N | N1 | N2 | CP 1 | CP 2 |
|---|---|---|---|---|
| 272 | 96 | 176 | 256 | 512 |
| 272 | 184 | 88 | 256 | 768 |
| 272 | 228 | 44 | 256 | 1280 |
| 273 | 186 | 87 | 400 | 416 |
| 273 | 93 | 180 | 384 | 416 |
| 273 | 183 | 90 | 384 | 448 |
| 273 | 228 | 45 | 384 | 512 |
| 273 | 114 | 159 | 256 | 512 |
| 275 | 200 | 75 | 368 | 384 |
| 275 | 100 | 175 | 352 | 384 |
| 275 | 50 | 225 | 320 | 384 |
| 275 | 25 | 250 | 256 | 384 |
| 275 | 150 | 125 | 256 | 512 |
| 276 | 204 | 72 | 352 | 368 |
| 276 | 240 | 36 | 352 | 384 |
| 276 | 258 | 18 | 352 | 416 |
| 276 | 267 | 9 | 352 | 480 |
| 276 | 120 | 156 | 320 | 384 |
| 276 | 198 | 78 | 320 | 448 |
| 276 | 237 | 39 | 320 | 576 |
| 276 | 60 | 216 | 256 | 384 |
| 276 | 168 | 108 | 256 | 512 |
| 276 | 222 | 54 | 256 | 768 |
| 276 | 249 | 27 | 256 | 1280 |
| 279 | 204 | 75 | 304 | 320 |
| 279 | 102 | 177 | 288 | 320 |
| 279 | 51 | 228 | 256 | 320 |
| 279 | 165 | 114 | 256 | 384 |
| 279 | 222 | 57 | 256 | 512 |
| 280 | 200 | 80 | 288 | 304 |
| 280 | 240 | 40 | 288 | 320 |
| 280 | 260 | 20 | 288 | 352 |
| 280 | 270 | 10 | 288 | 416 |
| 280 | 275 | 5 | 288 | 544 |
| 280 | 120 | 160 | 256 | 320 |
| 280 | 200 | 80 | 256 | 384 |
| 280 | 240 | 40 | 256 | 512 |
| 280 | 260 | 20 | 256 | 768 |
| 280 | 270 | 10 | 256 | 1280 |

(continued)

| N | N1 | N2 | CP 1 | CP 2 |
|---|---|---|---|---|
| 282 | 186 | 96 | 256 | 272 |
| 282 | 234 | 48 | 256 | 288 |
| 282 | 258 | 24 | 256 | 320 |
| 282 | 270 | 12 | 256 | 384 |
| 282 | 276 | 6 | 256 | 512 |
| 282 | 279 | 3 | 256 | 768 |
| 284 | 164 | 120 | 224 | 240 |
| 284 | 224 | 60 | 224 | 256 |
| 284 | 254 | 30 | 224 | 288 |
| 284 | 269 | 15 | 224 | 352 |
| 285 | 150 | 135 | 208 | 224 |

In this way, if the first time unit can include 300 symbols without considering a CP, the foregoing value of N may be selected as a quantity of symbols when the CP is considered, the foregoing value of N1 may be selected as a quantity of second symbols when the CP is considered, the foregoing value of N2 may be selected as a quantity of third symbols when the CP is considered, and the foregoing values may be selected as the first length and the second length when the CP is considered.

In the foregoing solution, when the terminal device performs transmission, a quantity of prime factors of a quantity of symbols in one time unit is as large as possible, to make scheduling easier. To be specific, if the terminal device is scheduled based on a length of a factor, a scheduling result is that there are an integer quantity of scheduling opportunities. In this way, it can be ensured that spectrum resources can be better used in a large-bandwidth scenario, to avoid a spectrum resource waste caused due to transmission being limited by a time unit boundary, and improve communication efficiency.

Embodiments of this application may be used independently, or may be used in combination with each other. Alternatively, different steps in embodiments may be used independently or in combination with each other. For similar steps in different embodiments, descriptions may be mutually referenced.

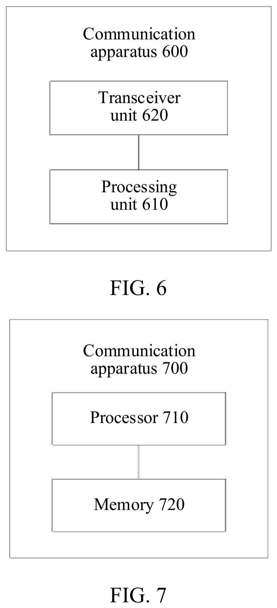

Corresponding to the foregoing method, an embodiment of this application provides a communication device. FIG. 6 to FIG. 8 are diagrams of structures of possible communication apparatuses according to embodiments of this application. These communication apparatuses may be configured to implement functions of the terminal device or the network device in the foregoing method embodiments, and therefore can also achieve beneficial effects of the foregoing method embodiments. In embodiments of this application, the communication device may be the RAN node, the terminal device, the core network device, or another network device shown in FIG. 1, or may be a component (for example, a chip) in these devices.

As shown in FIG. 6, a communication apparatus 600 includes a processing unit 610 and a transceiver unit 620. The communication apparatus 600 is configured to implement functions of the terminal device or the network device in the method embodiments shown in FIG. 3.

When the communication apparatus 600 is configured to implement a function of the terminal device in the method embodiments shown in FIG. 3, the transceiver unit 620 is configured to send or receive first transmission on at least one first symbol, where the at least one first symbol is located in a first time unit, the first time unit includes a plurality of first symbols, a quantity of the first symbols included in the first time unit is N, and N is a positive integer.

In a possible design, N is equal to a product of at least three prime numbers.

In a possible design, N is one of 184, 189, 192, 196, 198, 200, 204, 208, 210, 216, 220, 224, 225 or 228.

In a possible design, duration of the first time unit is 1 divided by $2^u$ milliseconds, u is a positive integer, and u is less than or equal to 8.

In a possible design, the processing unit 610 is configured to control or indicate the transceiver unit 620 to perform receiving, and is configured to control or indicate the transceiver unit 620 to perform sending.

In a possible design, cyclic prefix lengths of the plurality of first symbols each are a product of a first length and a second time unit or a product of a second length and the second time unit, where each of the first length and the second length is an integer multiple of one of 16, 32, 64, 128, or 256, the first length is not equal to the second length, the second time unit is m/(first subcarrier spacing * first value), the first subcarrier spacing is one of 480 kHz, 960 kHz, 1920 kHz, 3840 kHz, or 7680 kHz, the first value is one of 2048, 4096, 8192, 16384, or 32768, and m is 1 or a positive integer.

In a possible design, a quantity of second symbols in the first time unit is N1, and a quantity of third symbols in the first time unit is N2, where the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

In a possible design, first N1 consecutive symbols in the first time unit are second symbols, and last N2 consecutive symbols in the first time unit are third symbols.

In a possible design, first N3 consecutive symbols in the first time unit are second symbols, last N4 consecutive symbols in the first time unit are second symbols, and the N2 third symbols are consecutive in the first time unit, where N3+N4=N1.

In a possible design, the first time unit includes consecutive third time units, a first symbol in the third time unit is the second symbol, and remaining symbols in the third time unit are floor (N1/N2) third symbols, where floor means rounding down, and N1 is greater than N2.

In a possible design, the product of the first length and the second time unit is greater than 50 nanoseconds, and the product of the second length and the second time unit is greater than 50 nanoseconds.

In a possible design, the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216 or 1232, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165 or 201, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344 or 1360, and N2 is one of 168, 176, 136, 160, 102, 51, 120, 92, 144, 116, 156, 114, 138, 132, 192, 140, 180, 200, 128 or 108.

In a possible design, N1 is 80, N2 is 120, the first length is 800, and the second length is 832. Alternatively, N1 is 80, N2 is 120, the first length is 512, and the second length is 1024.

When the communication apparatus 600 is configured to implement a function of the network device in the method embodiments shown in FIG. 3, the transceiver unit 620 is configured to receive or send first transmission on at least one first symbol, where the at least one first symbol is located in a first time unit, the first time unit includes a plurality of first symbols, a quantity of the first symbols included in the first time unit is N, and N is a positive integer.

In a possible design, N is equal to a product of at least three prime numbers.

In a possible design, N is one of 184, 189, 192, 196, 198, 200, 204, 208, 210, 216, 220, 224, 225, or 228.

In a possible design, duration of the first time unit is 1 divided by $2^u$ milliseconds, u is a positive integer, and u is less than or equal to 8.

In a possible design, the processing unit 610 is configured to control or indicate the transceiver unit 620 to perform receiving, and is configured to control or indicate the transceiver unit 620 to perform sending.

In a possible design, cyclic prefix lengths of the plurality of first symbols each are a product of a first length and a second time unit or a product of a second length and the second time unit, where each of the first length and the second length is an integer multiple of one of 16, 32, 64, 128, or 256, the first length is not equal to the second length, the second time unit is m/(first subcarrier spacing * first value), the first subcarrier spacing is one of 480 kHz, 960 kHz, 1920 kHz, 3840 kHz, or 7680 kHz, the first value is one of 2048, 4096, 8192, 16384, or 32768, and m is 1 or a positive integer.

In a possible design, a quantity of second symbols in the first time unit is N1, and a quantity of third quantity of symbols in the first time unit is N2, where the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

In a possible design, the first N1 consecutive symbols in the first time unit are the second symbol, and the last N2 consecutive symbols in the first time unit are the third symbol.

In a possible design, the first N3 consecutive symbols in the first time unit are the second symbol, the last N4 consecutive symbols in the first time unit are the second symbol, and the N2 third symbols are consecutive in the first time unit, where, N3+N4=N1.

In a possible design, the first time unit includes consecutive third time units, the first symbol in the third time unit is the second symbol, and remaining symbols in the third time unit are floor(N1/N2) third symbols, where floor means rounding down; and, N1 is greater than N2.

In a possible design, the product of the first length and the second time unit is greater than 50 nanoseconds, and the product of the second length and the second time unit is greater than 50 nanoseconds.

In a possible design, the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216 or 1232, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165 or 201, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344 or 1360, and N2 is one of 168, 176, 136, 160, 102, 51, 120, 92, 144, 116, 156, 114, 138, 132, 192, 140, 180, 200, 128 or 108.

In a possible design, N1 is 80, N2 is 120, the first length is 800, and the second length is 832. Alternatively, N1 is 80, N2 is 120, the first length is 512, and the second length is 1024.

An embodiment of this application provides a communication apparatus 700. FIG. 7 is a schematic block diagram of another communication apparatus according to an embodiment of this application. The communication apparatus 700 includes a processor 710. The processor 710 is coupled to at least one memory 720. The processor 710 is configured to read a computer program stored in the at least one memory 720, to perform the method in any one of the possible implementations in embodiments of this application.

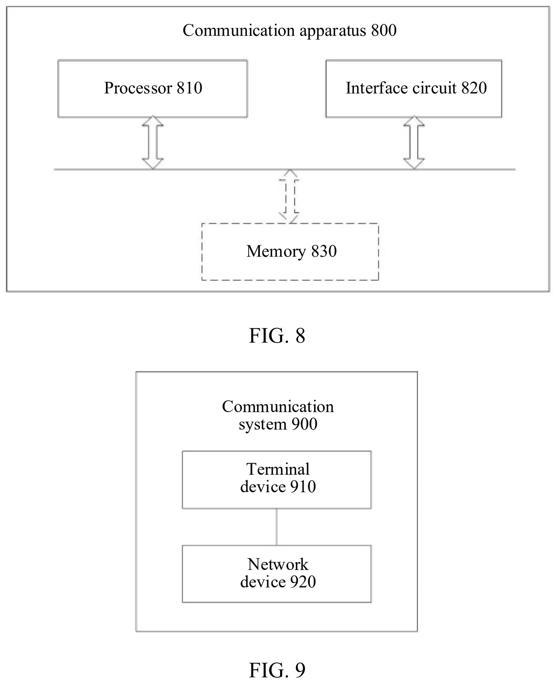

An embodiment of this application further provides a communication apparatus 800. As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, store input data needed by the processor 810 to run the instructions, or store data generated after the processor 810 runs the instructions.

When the communication apparatus 800 is configured to implement the method shown in FIG. 3, the processor 810 is configured to implement a function of the processing unit 610, and the interface circuit 820 is configured to implement a function of the transceiver unit 620.

When the communication apparatus is a chip used in a terminal device, the chip of the terminal device implements a function of the terminal device in the foregoing method embodiments. The chip of the terminal device receives information from another module (for example, a radio frequency module or an antenna) of the terminal device, where the information is sent by a network device to the terminal device. Alternatively, the chip of the terminal device sends information to another module (for example, a radio frequency module or an antenna) of the terminal device, where the information is sent by the terminal device to a network device.

When the communication apparatus is a chip used in a network device, the chip of the network device implements a function of the network device in the foregoing method embodiments. The chip of the network device receives information from another module (for example, a radio frequency module or an antenna) of the network device, where the information is sent by a terminal device to the network device. Alternatively, the chip of the network device sends information to another module (for example, a radio frequency module or an antenna) of the network device, where the information is sent by the network device to a terminal device.

The processor in embodiments of this application may be an integrated circuit chip having a signal processing capability. In an implementation process, the steps in the foregoing method embodiments may be completed through an integrated logic circuit of hardware in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, steps, and logical block diagrams disclosed in embodiments of this application may be implemented or performed. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware module and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing method together with hardware of the processor.

The memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application provides a communication system 900, including a terminal device 910 and a network device 920 in the communication method provided in embodiments of this application. FIG. 9 is a schematic block diagram of the communication system 900 according to an embodiment of this application.

The method steps in embodiments of this application may be implemented by hardware, or may be implemented by executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions according to embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

It may be understood that in embodiments of this application, sequence numbers of the foregoing processes do not mean an execution sequence, and the execution sequence of the processes should be determined based on functions and internal logic of the processes, and should not constitute any limitation on implementation processes of embodiments of this application.

It should be understood that, in this application, "when" and "if" mean that an apparatus performs corresponding processing in an objective case, and are not intended to limit time. The terms do not mean that the apparatus is required to perform a determining action during implementation, and do not mean any other limitation.

A person skilled in the art may understand that various numbers such as first and second in this application are merely used for distinguishing for ease of description, and are not used to limit the scope of embodiments of this application. Specific values of numbers (which may also be referred to as indexes) in this application, specific values of quantities, and locations are merely used for the illustration purpose, are not unique representations, and are not intended to limit the scope of embodiments of this application. Various numbers such as first and second in this application are also merely used for distinguishing for ease of description, and are not used to limit the scope of embodiments of this application.

In addition, the term "and/or" in this application merely describes an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects. In this application, the term "at least one" may indicate "one" and "two or more". For example, at least one of A, B, and C may indicate the following seven cases: Only A exists, only B exists, only C exists, both A and B exist, both A and C exist, and both C and B exist, and A, B, C all exist.

It may be clearly understood by a person skilled in the art that, for the purpose of convenient and brief description, for a detailed working process of the foregoing system, apparatuses, and unit, refer to a corresponding process in the foregoing method embodiments. Details are not described herein again.

For several embodiments provided in this application, it should be understood that the disclosed system, apparatuses and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or units may be implemented in electrical, mechanical, or other forms.

Units described as separate parts may or may not be physically separate, and parts displayed as units may or may not be physical units, that is, may be located in one position, or may be distributed on a plurality of network units. Some or all of the units may be selected based on an actual need to achieve the objectives of the solutions of the embodiment.

In addition, functional units in embodiments of this application may be integrated into one processing unit, or each of the units may exist alone physically, or two or more units may be integrated into one unit.

## Claims

1. A communication method, comprising:

   sending or receiving first transmission on at least one first symbol, wherein
   the at least one first symbol is located in a first time unit, the first time unit consists of a plurality of first symbols, a quantity of the first symbols comprised in the first time unit is N, N is equal to a product of at least three prime numbers, duration of the first time unit is 1 divided by $2^u$ milliseconds, u is a positive integer, and u is less than or equal to 8.

2. The method according to claim 1, wherein

   cyclic prefix lengths of the plurality of first symbols each are a product of a first length and a second time unit or a product of a second length and the second time unit, wherein
   each of the first length and the second length is an integer multiple of one of 16, 32, 64, 128, or 256, the first length is not equal to the second length, the second time unit is m/(first subcarrier spacing*first value) seconds, the first subcarrier spacing is one of 480 kHz, 960 kHz, 1920 kHz, 3840 kHz, or 7680 kHz, the first value is one of 2048, 4096, 8192, 16384, or 32768, and m is a positive integer.

3. The method according to claim 2, wherein
   a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

4. The method according to claim 3, wherein
   first N1 consecutive symbols in the first time unit are the second symbols, and last N2 consecutive symbols in the first time unit are the third symbols.

5. The method according to claim 3, wherein
   first N3 consecutive symbols in the first time unit are the second symbols, last N4 consecutive symbols in the first time unit are the second symbols, and the N2 third symbols are consecutive in the first time unit, wherein

$$N3+N4=N1.$$

6. The method according to claim 3, wherein
   the first time unit consists of consecutive third time units, a 1st symbol in the third time unit is the second symbol, and remaining symbols in the third time unit are floor(N1/N2) third symbols, wherein floor represents rounding down, and N1 is greater than N2.

7. The method according to any one of claims 2 to 6, wherein
   the product of the first length and the second time unit is greater than 50 nanoseconds, and the product of the second length and the second time unit is greater than 50 nanoseconds.

8. The method according to any one of claims 2 to 7, wherein
   the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360, and N2 is one of 168, 176, 136, 160, 102, 51, 120, 92, 144, 116, 156, 114, 138, 132, 192, 140, 180, 200, 128, or 108.

**9.** The method according to any one of claims 2 to 7, wherein

N1 is 80, N2 is 120, the first length is 800, and the second length is 832; or
N1 is 80, N2 is 120, the first length is 512, and the second length is 1024.

**10.** A communication method, comprising:

sending or receiving first transmission on at least one first symbol, wherein
the at least one first symbol is located in a first time unit, the first time unit consists of a plurality of first symbols, a quantity of the first symbols comprised in the first time unit is N, and N is one of 184, 189, 192, 196, 198, 200, 204, 208, 210, 216, 220, 224, 225, or 228.

**11.** The method according to claim 10, wherein
duration of the first time unit is 1 divided by $2^u$ milliseconds, u is a positive integer, and u is less than or equal to 8.

**12.** The method according to claim 10 or 11, wherein

cyclic prefix lengths of the plurality of first symbols each are a product of a first length and a second time unit or a product of a second length and the second time unit, wherein
each of the first length and the second length is an integer multiple of one of 16, 32, 64, 128, or 256, the first length is not equal to the second length, the second time unit is m/(first subcarrier spacing*first value), the first subcarrier spacing is one of 480 kHz, 960 kHz, 1920 kHz, 3840 kHz, or 7680 kHz, the first value is one of 2048, 4096, 8192, 16384, or 32768, and m is a positive integer.

**13.** The method according to claim 12, wherein
a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

**14.** The method according to claim 13, wherein
first N1 consecutive symbols in the first time unit are the second symbols, and last N2 consecutive symbols in the first time unit are the third symbols.

**15.** The method according to claim 13, wherein
first N3 consecutive symbols in the first time unit are the second symbols, last N4 consecutive symbols in the first time unit are the second symbols, and the N2 third symbols are consecutive in the first time unit, wherein

$$N3+N4=N1.$$

**16.** The method according to claim 13, wherein
the first time unit consists of consecutive third time units, a 1st symbol in the third time unit is the second symbol, and remaining symbols in the third time unit are floor(N1/N2) third symbols, wherein floor represents rounding down, and N1 is greater than N2.

**17.** The method according to any one of claims 12 to 16, wherein
the product of the first length and the second time unit is greater than 50 nanoseconds, and the product of the second length and the second time unit is greater than 50 nanoseconds.

**18.** The method according to any one of claims 12 to 17, wherein
the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360, and N2 is one of 168, 176, 136, 160, 102, 51, 120, 92, 144, 116, 156, 114, 138, 132, 192, 140, 180, 200, 128, or 108.

**19.** The method according to any one of claims 12 to 17, wherein

N1 is 80, N2 is 120, the first length is 800, and the second length is 832; or
N1 is 80, N2 is 120, the first length is 512, and the second length is 1024.

**20.** A communication apparatus, comprising:

a transceiver unit, configured to send or receive first transmission on at least one first symbol, wherein
the at least one first symbol is located in a first time unit, the first time unit consists of a plurality of first symbols, a quantity of the first symbols comprised in the first time unit is N, N is equal to a product of at least three prime numbers, duration of the first time unit is 1 divided by $2^u$ milliseconds, u is a positive integer, and u is less than or equal to 8.

**21.** The apparatus according to claim 20, wherein

cyclic prefix lengths of the plurality of first symbols each are a product of a first length and a second time unit or a product of a second length and the second time unit, wherein
each of the first length and the second length is an integer multiple of one of 16, 32, 64, 128, or 256, the first length is not equal to the second length, the second time unit is m/(first subcarrier spacing*first value), the first subcarrier spacing is one of 480 kHz, 960 kHz, 1920 kHz, 3840 kHz, or 7680 kHz, the first value is one of 2048, 4096, 8192, 16384, or 32768, and m is a positive integer.

**22.** The apparatus according to claim 21, wherein
a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

**23.** The apparatus according to claim 22, wherein
first N1 consecutive symbols in the first time unit are the second symbols, and last N2 consecutive symbols in the first time unit are the third symbols.

**24.** The apparatus according to claim 22, wherein
first N3 consecutive symbols in the first time unit are the second symbols, last N4 consecutive symbols in the first time unit are the second symbols, and the N2 third symbols are consecutive in the first time unit, wherein

$$N3+N4=N1.$$

**25.** The apparatus according to claim 22, wherein
the first time unit consists of consecutive third time units, a 1st symbol in the third time unit is the second symbol, and remaining symbols in the third time unit are floor(N1/N2) third symbols, wherein floor represents rounding down, and N1 is greater than N2.

**26.** The apparatus according to any one of claims 21 to 25, wherein
the product of the first length and the second time unit is greater than 50 nanoseconds, and the product of the second length and the second time unit is greater than 50 nanoseconds.

**27.** The apparatus according to any one of claims 21 to 26, wherein
the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360, and N2 is one of 168, 176, 136, 160, 102, 51, 120, 92, 144, 116, 156, 114, 138, 132, 192, 140, 180, 200, 128, or 108.

**28.** The apparatus according to any one of claims 21 to 26, wherein

N1 is 80, N2 is 120, the first length is 800, and the second length is 832; or
N1 is 80, N2 is 120, the first length is 512, and the second length is 1024.

**29.** A communication apparatus, comprising:

a transceiver unit, configured to send or receive first transmission on at least one first symbol, wherein
the at least one first symbol is located in a first time unit, the first time unit consists of a plurality of first symbols, a quantity of the first symbols comprised in the first time unit is N, and N is one of 184, 189, 192, 196, 198, 200, 204, 208, 210, 216, 220, 224, 225, or 228.

**30.** The apparatus according to claim 29, wherein
duration of the first time unit is 1 divided by $2^u$ milliseconds, u is a positive integer, and u is less than or equal to 8.

**31.** The apparatus according to claim 29 or 30, wherein

cyclic prefix lengths of the plurality of first symbols each are a product of a first length and a second time unit or a product of a second length and the second time unit, wherein
each of the first length and the second length is an integer multiple of one of 16, 32, 64, 128, or 256, the first length is not equal to the second length, the second time unit is m/(first subcarrier spacing*first value), the first subcarrier spacing is one of 480 kHz, 960 kHz, 1920 kHz, 3840 kHz, or 7680 kHz, the first value is one of 2048, 4096, 8192, 16384, or 32768, and m is a positive integer.

**32.** The apparatus according to claim 31, wherein
a quantity of second symbols in the first time unit is N1, a quantity of third symbols in the first time unit is N2, the second symbol is a symbol that is of the plurality of first symbols and whose cyclic prefix length is the product of the first length and the second time unit, the third symbol is a symbol that is of the plurality of first symbols and whose cyclic prefix length is the product of the second length and the second time unit, and N1 and N2 are integers greater than or equal to 0.

**33.** The apparatus according to claim 32, wherein
first N1 consecutive symbols in the first time unit are the second symbols, and last N2 consecutive symbols in the first time unit are the third symbols.

**34.** The apparatus according to claim 32, wherein
first N3 consecutive symbols in the first time unit are the second symbols, last N4 consecutive symbols in the first time unit are the second symbols, and the N2 third symbols are consecutive in the first time unit, wherein

$$N3+N4=N1.$$

**35.** The apparatus according to claim 32, wherein
the first time unit consists of consecutive third time units, a 1st symbol in the third time unit is the second symbol, and remaining symbols in the third time unit are floor(N1/N2) third symbols, wherein floor represents rounding down, and N1 is greater than N2.

**36.** The apparatus according to any one of claims 31 to 35, wherein

the product of the first length and the second time unit is greater than 50 nanoseconds, and the product of the second length and the second time unit is greater than 50 nanoseconds.

**37.** The apparatus according to any one of claims 31 to 36, wherein
the first length is one of 208, 256, 272, 288, 320, 352, 368, 384, 448, 512, 576, 608, 624, 640, 704, 720, 768, 800, 816, 832, 864, 896, 912, 1024, 1088, 1104, 1120, 1152, 1216, or 1232, N1 is one of 142, 163, 140, 174, 138, 129, 192, 150, 173, 124, 160, 178, 168, 183, 141, 120, 159, 180, 190, 195, 170, 185, 186, 144, 189, 171, 128, 188, 198, 203, 136, 172, 199, 164, 112, 204, 210, 213, 156, 132, 205, 130, 175, 208, 216, 220, 222, 223, 165, or 201, the second length is one of 224, 240, 272, 288, 304, 320, 352, 384, 400, 416, 432, 448, 464, 480, 512, 544, 576, 592, 608, 640, 656, 672, 688, 704, 736, 752, 768, 784, 800, 832, 848, 864, 880, 896, 928, 944, 960, 976, 1024, 1040, 1056, 1088, 1120, 1136, 1152, 1184, 1216, 1248, 1264, 1280, 1296, 1312, 1344, or 1360, and N2 is one of 168, 176, 136, 160, 102, 51, 120, 92, 144, 116, 156, 114, 138, 132, 192, 140, 180, 200, 128, or 108.

**38.** The apparatus according to any one of claims 31 to 36, wherein

N1 is 80, N2 is 120, the first length is 800, and the second length is 832; or
N1 is 80, N2 is 120, the first length is 512, and the second length is 1024.

**39.** A communication apparatus, comprising at least one processor and an interface circuit, wherein the interface circuit is configured to provide input or output of instructions and/or data for the at least one processor, and when the at least one processor executes the instructions, the apparatus is caused to implement the method according to any one of claims 1 to 19.

**40.** A computer-readable storage medium, comprising instructions, wherein when the instructions are run on a computer, the computer is caused to perform the method according to any one of claims 1 to 19.

**41.** A computer program product, comprising instructions, wherein when the instructions are run on a computer, the computer is caused to perform the method according to any one of claims 1 to 19.

**42.** A chip, comprising a processor and a communication interface, wherein the processor is configured to read instructions or a computer program to perform the method according to any one of claims 1 to 19.

**43.** A communication system, comprising the communication apparatus for sending the first transmission according to any one of claims 20 to 38 and the communication apparatus for receiving the first transmission according to any one of claims 20 to 38.

100
1000
120i
110a
120j
110b
120a
120c
200
Core network
120d
120f
120g
120h
120b
120e
300
Internet

FIG. 1

SCS=15 kHz
Slot length: 1 ms
CP
Data
CP
Data
...
CP
Data
Symbol
SCS=30 kHz
Slot length: 0.5 ms
CP
Data
CP
Data
...
CP
Data
Symbol
SCS=120 kHz
Slot length: 0.125 ms
CP
Data
CP
Data
...
CP
Data
Symbol

FIG. 2

Terminal device
Network device
S310: The terminal device receives configuration or scheduling information from the network device
S320: The terminal device sends or receives first transmission on at least one first symbol

FIG. 3

First time unit
First time unit
First time unit
First time unit
First symbol
First symbol
First symbol
First symbol

FIG. 4

First time unit
Implementation 1
Implementation 2
Implementation 3
Implementation 4
Second symbol
Third symbol

FIG. 5

Communication apparatus 600
Transceiver unit 620
Processing unit 610

FIG. 6

Communication apparatus 700
Processor 710
Memory 720

FIG. 7

Communication apparatus 800
Processor 810
Interface circuit 820
Memory 830

FIG. 8

Communication system 900
Terminal device 910
Network device 920

FIG. 9

## INTERNATIONAL SEARCH REPORT

International application No.
**PCT/CN2024/103409**

**A. CLASSIFICATION OF SUBJECT MATTER**

H04W72/0446(2023.01)i

According to International Patent Classification (IPC) or to both national classification and IPC

**B. FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

3GPP, CNTXT, ENTXT, ENTXTC: 单位时间, 时间单元, 时隙, 符号, 素数, 素因数, 质数, 质因数, 质因子, 聚合, 多, 三, 子载波间隔, 循环前缀, 不同, time unit, slot, symbol, OFDM, prime number, aggregat+, multi, three, SCS, subcarrier spacing, CP, cyclic prefix, different

**C. DOCUMENTS CONSIDERED TO BE RELEVANT**

| Category* | Citation of document, with indication, where appropriate, of the relevant passages | Relevant to claim No. |
|---|---|---|
| X | US 2023096490 A1 (APPLE INC.) 30 March 2023 (2023-03-30) description, paragraphs 50-68, and figures 8A and 8B | 1, 10-11, 20, 29-30, 39-43 |
| Y | US 2023096490 A1 (APPLE INC.) 30 March 2023 (2023-03-30) description, paragraphs 50-68, and figures 8A and 8B | 2-4, 7, 12-14, 17, 21-23, 26, 31-33, 36 |
| Y | CN 115913498 A (HUAWEI TECHNOLOGIES CO., LTD.) 04 April 2023 (2023-04-04) description, paragraphs 99-210 | 2-4, 7, 12-14, 17, 21-23, 26, 31-33, 36 |
| X | CN 115118407 A (OROPE FRANCE SARL) 27 September 2022 (2022-09-27) description, paragraphs 52-67 | 1, 10-11, 20, 29-30, 39-43 |
| A | CN 115349246 A (QUALCOMM INC.) 15 November 2022 (2022-11-15) entire document | 1-43 |
| A | US 2023023874 A1 (LG ELECTRONICS, INC.) 26 January 2023 (2023-01-26) entire document | 1-43 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 August 2024** | **11 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2024/103409**

| Patent document cited in search report | Publication date (day/month/year) | Patent family member(s) | Publication date (day/month/year) |
|---|---|---|---|
| US 2023096490 A1 | 30 March 2023 | WO 2022151159 A1 | 21 July 2022 |
| | | CN 117044143 A | 10 November 2023 |
| CN 115913498 A | 04 April 2023 | None | |
| CN 115118407 A | 27 September 2022 | US 2024014989 A1 | 11 January 2024 |
| | | WO 2022200824 A1 | 29 September 2022 |
| | | EP 4315698 A1 | 07 February 2024 |
| CN 115349246 A | 15 November 2022 | WO 2021211286 A1 | 21 October 2021 |
| | | US 2021328843 A1 | 21 October 2021 |
| | | US 11456904 B2 | 27 September 2022 |
| | | EP 4136813 A1 | 22 February 2023 |
| | | IN 202247044821 A | 16 September 2022 |
| | | CN 115349246 B | 13 October 2023 |
| US 2023023874 A1 | 26 January 2023 | WO 2021117940 A1 | 17 June 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310837813